# EUROPEAN PATENT SPECIFICATION

(11) **EP 4 610 495 B1**
(45) Date of publication and mention of the grant of the patent: **24.06.2026**
(21) Application number: 23916162.3
(22) Date of filing: 21.11.2023
(51) Int. Cl.: F04B 37/18, F04B 25/00, F04B 39/06, F04B 39/12, F04B 41/06, F04B 49/10, F04B 49/22, F17C 13/00, F04B 15/08

(54) **COMPRESSOR UNIT**
VERDICHTEREINHEIT
UNITÉ DE COMPRESSEUR

(30) Priority: 12.01.2023 JP 2023002863; 26.05.2023 JP 2023087175
(43) Date of publication of application: 03.09.2025
(73) Proprietor: KABUSHIKI KAISHA KOBE SEIKO SHO (KOBE STEEL, LTD.), Hyogo 651-8585 (JP)
(72) Inventor: NAGURA, Kenji, Hyogo 676-8670 (JP); KUBO, Kenji, Hyogo 676-8670 (JP)
(74) Representative: TBK
(86) International application number: PCT/JP2023/041898
(87) International publication number: WO 2024/150545

(56) References cited:
- EP-B1- 2 501 984
- CN-A- 103 062 620
- JP-A- 2017 122 481
- JP-B1- 7 085 079
- KR-A- 20210 050 016
- KR-A- 20210 050 016
- KR-A- 20210 062 119
- US-B2- 11 300 355

## Description

### Technical Field

The present invention relates to a reciprocating compressor unit.

### Background Art

In recent years, in consideration of the environment, use of hydrogen for power generation, fuel for automobiles, and the like is considered, and demand for hydrogen is increasing. Low-temperature boil-off gas (BOG) such as liquefied natural gas (LNG) and liquid hydrogen (LH2) is recovered by a compressor and supplied to demand destinations such as engines. In particular, the boil-off gas generated from LH2 has a very low temperature. Therefore, if a configuration is adopted in which the compressor directly suctions the boil-off gas, restrictions will be imposed, such as it is necessary to select materials suitable for extremely low temperatures, adopt design conditions that take into account the amount of thermal deformation, and implement strict heat insulation treatment.

In that connection, the following problem is pointed out in Patent Literature 1. "In recent years, hydrogen has been attracting attention as a new energy source. When hydrogen is used as an energy source, it is assumed that hydrogen will be stored and transported in a liquefied state, like natural gas. However, hydrogen has the property that the liquefaction temperature is lower than the liquefaction temperature of air. Therefore, if facilities such as reciprocating compressors for natural gas and other gases are applied to hydrogen as is, there is a possibility of a trouble caused by cryogenic liquid hydrogen. For example, this may generate liquefied air around the apparatus that supplies liquid hydrogen."

In contrast, Patent Literature 1 describes that "In this reciprocating compressor, a compression part that compresses gas is housed in a container part. The container part forms a vacuum region around the compression part. Then, the compression part is thermally insulated from the outer region by the vacuum region. That is, even when cryogenic gas is provided to the compression part, the surrounding region of the reciprocating compressor is not excessively cooled. Therefore, the generation of liquefied air can be suppressed". However, in general, for a moving machine that generates vibrations during operation and equipment that requires regular maintenance through inspection openings (for example, reciprocating compressor and the like), high-performance insulation is extremely difficult.

Patent Literature 2 and 3 propose a technology that uses a preheater to adjust the temperature of the suction gas in a screw compressor. Patent Literature 4 discloses a reciprocating compressor and shows a heat exchanger that exchanges heat between a boil-off gas before being suctioned into the compression part and a boil-off gas after being discharged from the compression part. However, since this heat exchanger is intended for the re-liquefaction of the boil-off gas after being compressed in the compression part, the boil-off gas cooled by the cooler disposed downstream of the compression part is introduced into the heat exchanger.

Meanwhile, the following problem is pointed out in Patent Literature 5. "Conventionally, when the boil-off gas (BOG) evaporated in the LNG low-temperature storage tank is compressed by a low-temperature gas multi-stage compressor and supplied to a plant, the temperature of the BOG tends to fluctuate widely from minus one hundred and several degrees Celsius to room temperature. Particularly, immediately after the start of the multi-stage compressor, the suction side temperature rises close to room temperature, and if this is compressed as is, the discharge temperature becomes equal to or higher than an allowable temperature, disabling operations."

For liquefied hydrogen, the issue disclosed in Patent Literature 5 may become more serious due to its boiling point lower than LNG. The reciprocating compressor that handles the boil-off gas of liquefied hydrogen needs to be adapted to a wide temperature range from extremely low temperatures to room temperature.

Patent Literature 6 discloses a reciprocating compressor unit, wherein the reciprocating compressor unit recovers a hydrogen gas that is a boil-off gas from a liquid hydrogen storage tank and supplies at least a portion of the hydrogen gas to a high-pressure demand destination, e.g. an engine or a power generator.

### Citation List

### Patent Literature

Patent Literature 1: JP 2020-172870 A
Patent Literature 2: JP 7085079 B2
Patent Literature 3: JP 2001-65795 A
Patent Literature 4: JP 2019-27590 A
Patent Literature 5: JP H04-12178 A
Patent Literature 6: US 11,300,355 B2

### Summary of Invention

An object of the present invention is to appropriately protect constituent devices of the reciprocating compressor unit that handles the boil-off gas of liquefied hydrogen from the wide temperature variation of the boil-off gas.

A compressor unit according to one aspect of the present invention is a reciprocating compressor unit that recovers a hydrogen gas that is a boil-off gas from a liquid hydrogen storage tank and supplies at least a portion of the hydrogen gas to a high-pressure demand destination (D1) that includes at least one of an engine, a power generation facility, or a boiler. The compressor unit according to the present aspect includes a plurality of compression stages, a crank mechanism, a spillback part (SB1), a low-pressure gas exhaust path, a demand destination switching means (CV1), a check valve, a first temperature sensor, a second temperature sensor, and a controller.

The plurality of compression stages are configured to compress the hydrogen gas suctioned from a suction channel. The crank mechanism is configured to drive the plurality of compression stages. The spillback part (SB1) includes a spillback channel and a spillback valve. The spillback channel returns the hydrogen gas discharged to a discharge channel on a discharge side of the plurality of compression stages or the hydrogen gas flowing through an intermediate channel between the plurality of compression stages to the suction channel. The spillback valve adjusts a spillback amount in the spillback channel. The low-pressure gas exhaust path branches from a branching point provided in the intermediate channel or the discharge channel and allows the hydrogen gas to be exhausted to a low-pressure demand destination (D2) configured to process the hydrogen gas at a pressure lower than pressure of the hydrogen gas required by the high-pressure demand destination (D1). The demand destination switching means (CV1) is provided in the low-pressure gas exhaust path or at the branching point. The check valve is arranged downstream of the branching point. The first temperature sensor is arranged upstream of the branching point in the intermediate channel or the discharge channel. The second temperature sensor is arranged between a connection part of the spillback channel and a first compression stage as a foremost stage among the plurality of compression stages in the suction channel. The controller controls the demand destination switching means (CV1) and the spillback valve.

In the compressor unit according to the present aspect, the controller controls the demand destination switching means (CV1) to assume a first switching state in which the hydrogen gas is caused to flow through the low-pressure gas exhaust path, when the compressor unit starts up and a temperature TS1 acquired by the first temperature sensor is equal to or higher than a predetermined first temperature threshold T1 higher than 0°C. The controller controls the demand destination switching means (CV1) to assume a second switching state in which the hydrogen gas is sent to the discharge channel toward the high-pressure demand destination (D1) when the temperature TS1 acquired by the first temperature sensor becomes lower than the first temperature threshold T1. The controller refers to a suction temperature TS2 acquired by the second temperature sensor and controls the spillback valve such that the suction temperature TS2 falls within a temperature range determined in advance when the demand destination switching means (CV1) is in the second switching state.

The temperature range determined in advance is set to a range higher than a reference temperature based on liquefaction temperature of air and lower than 0°C.

A compressor unit according to another aspect of the present invention is a reciprocating compressor unit that recovers a hydrogen gas that is a boil-off gas from a liquid hydrogen storage tank and supplies at least a portion of the hydrogen gas to a high-pressure demand destination (D1) that includes at least one of an engine, a power generation facility, or a boiler. The compressor unit according to the present aspect includes a plurality of compression stages, a crank mechanism, a spillback part (SB1), a low-pressure gas exhaust path, a demand destination switching means (CV1), a check valve, a first temperature sensor, a second temperature sensor, a pressure sensor, and a controller.

The plurality of compression stages compresses the hydrogen gas suctioned from a suction channel. The crank mechanism drives the plurality of compression stages. The spillback part (SB1) includes a spillback channel and a spillback valve. The spillback channel returns the hydrogen gas discharged to a discharge channel on a discharge side of the plurality of compression stages or the hydrogen gas flowing through an intermediate channel between the plurality of compression stages to the suction channel. The spillback valve adjusts a spillback amount in the spillback channel. The low-pressure gas exhaust path branches from a branching point provided in the intermediate channel and allows the hydrogen gas to be exhausted to a low-pressure demand destination (D2) configured to process the hydrogen gas at a pressure lower than a pressure of the hydrogen gas required by the high-pressure demand destination (D1). The demand destination switching means (CV1) is provided in the low-pressure gas exhaust path or at the branching point. The check valve is provided downstream of the branching point in the intermediate channel. The first temperature sensor is disposed upstream of the branching point in the intermediate channel. The second temperature sensor is disposed between a connection part of the spillback channel and the first compression stage in the suction channel. The pressure sensor is provided in the low-pressure gas exhaust path. The controller controls the demand destination switching means (CV1) and the spillback valve.

In the compressor unit according to the present aspect, the controller controls the demand destination switching means (CV1) to assume a first switching state in which the hydrogen gas discharged from the first compression stage located in a foremost stage among the plurality of compression stages is caused to flow through the low-pressure gas exhaust path, when the compressor unit starts up and a temperature TS1 acquired by the first temperature sensor is equal to or higher than a predetermined first temperature threshold T1 higher than 0°C. The controller controls the demand destination switching means (CV1) to assume a third switching state in which the hydrogen gas is caused to flow through both the low-pressure gas exhaust path and downstream of the branching point in the intermediate channel when the temperature TS1 acquired by the first temperature sensor becomes lower than the first temperature threshold T1. The controller controls the demand destination switching means (CV1) such that pressure PS2 acquired by the pressure sensor falls within a preset range, refers to a suction temperature TS2 acquired by the second temperature sensor, and controls the spillback valve such that the suction temperature TS2 falls within a temperature range determined in advance when the demand destination switching means (CV1) is in the third switching state.

The temperature range determined in advance is set to a range higher than a reference temperature based on liquefaction temperature of air and lower than 0°C.

### Brief Description of Drawings

FIG. 1 is a diagram schematically showing a configuration of a compressor unit according to a first embodiment.
FIG. 2 is a flowchart showing operation control executed by a controller during operation of the compressor unit.
FIG. 3 is a diagram schematically showing a partial configuration of the compressor unit according to a variation of the first embodiment.
FIG. 4 is a diagram schematically showing a partial configuration of the compressor unit according to a variation of the first embodiment.
FIG. 5 is a diagram schematically showing a partial configuration of a compressor unit according to a second embodiment.
FIG. 6 is a flowchart showing operation control executed by a controller during operation of the compressor unit.
FIG. 7 is a diagram schematically showing a partial configuration of the compressor unit according to a variation of the second embodiment.
FIG. 8 is a diagram schematically showing a partial configuration of a compressor unit according to a third embodiment.
FIG. 9 is a diagram schematically showing a partial configuration of the compressor unit according to a variation of the third embodiment.
FIG. 10 is a diagram schematically showing a partial configuration of a compressor unit according to a fourth embodiment.
FIG. 11 is a flowchart showing operation control executed by a controller during operation of the compressor unit.
FIG. 12 is a diagram schematically showing a partial configuration of the compressor unit according to a variation of the fourth embodiment.
FIG. 13 is a diagram schematically showing a partial configuration of a compressor unit according to a fifth embodiment.
FIG. 14 is a flowchart showing operation control executed by a controller during operation of the compressor unit.
FIG. 15 is a flowchart showing operation control executed by the controller during operation of the compressor unit.
FIG. 16 is a diagram schematically showing a partial configuration of the compressor unit according to a variation of the fifth embodiment.
FIG. 17 is a flowchart showing operation control executed by a controller during operation of the compressor unit.
FIG. 18 is a diagram schematically showing a partial configuration of the compressor unit according to a variation of the fifth embodiment.
FIG. 19 is a flowchart showing operation control executed by the controller during operation of the compressor unit.
FIG. 20 is a diagram schematically showing a partial configuration of the compressor unit according to a variation of the fifth embodiment.
FIG. 21 is a diagram schematically showing a partial configuration of a compressor unit according to a sixth embodiment.
FIG. 22 is a flowchart showing operation control executed by a controller during operation of the compressor unit.
FIG. 23 is a diagram schematically showing a partial configuration of a compressor unit according to a seventh embodiment.
FIG. 24 is a flowchart showing operation control executed by a controller during operation of the compressor unit.
FIG. 25 is a diagram schematically showing a partial configuration of the compressor unit according to a variation of the seventh embodiment.
FIG. 26 is a diagram schematically showing a partial configuration of the compressor unit according to a variation of the first embodiment.
FIG. 27 is a diagram schematically showing a partial configuration of the compressor unit according to a variation of the first embodiment.

### Description of Embodiments

Embodiments of the present invention will be described below with reference to the drawings. Note that embodiments described below exemplarily illustrates the present invention, and the present invention is not limited to the embodiments below except for an essential configuration of the present invention.

### (First Embodiment)

A compressor unit according to the present embodiment is a reciprocating compressor unit and is configured to recover a hydrogen gas, which is a boil-off gas, from a liquid hydrogen storage tank, compress the recovered hydrogen gas, and supply the compressed hydrogen gas to a demand destination. The temperature of the boil-off gas, which is a hydrogen gas, is about -253°C.

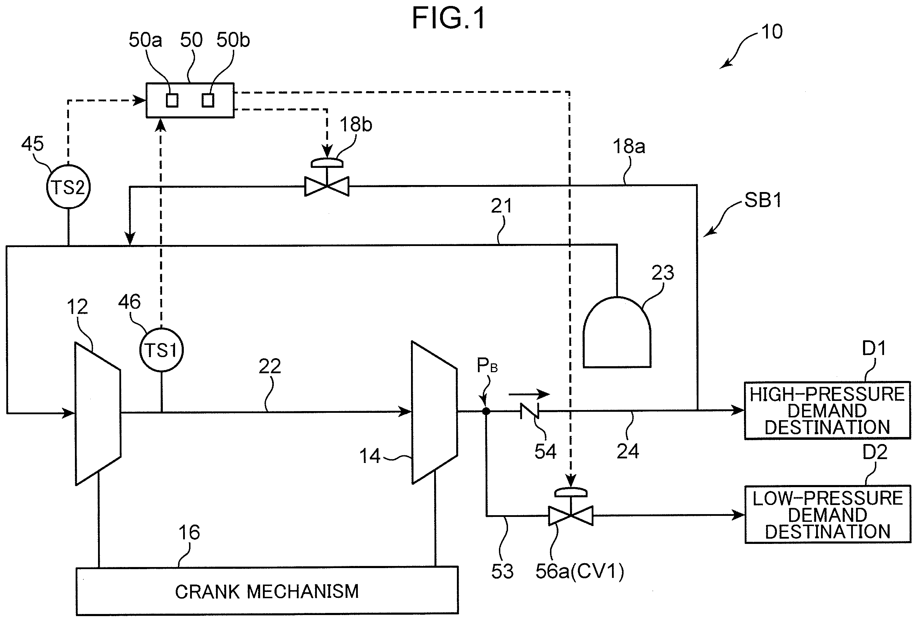

As shown in FIG. 1, the compressor unit 10 includes a plurality of compression stages (first compression stage 12, succeeding compression stage 14) that compresses the hydrogen gas in a suction channel 21, and a crank mechanism 16 that drives the first compression stage 12 and the succeeding compression stage 14.

The first compression stage 12 is connected to a liquid hydrogen storage tank 23 via the suction channel 21. Therefore, the boil-off gas that is a liquefied gas generated inside the liquid hydrogen storage tank 23 is suctioned into the first compression stage 12 through the suction channel 21.

The first compression stage 12 is configured using a reciprocating compression mechanism. The first compression stage 12 includes a piston reciprocating inside a cylinder part and is connected to the crank mechanism 16 via a piston rod coupled to the piston. Note that the first compression stage 12 may be configured using an oil-free compression mechanism that does not use lubricating oil. The first compression stage 12 may be a compression stage having a double acting structure or a compression stage having a single acting structure.

Furthermore, in FIG. 1, for convenience, the first compression stage 12 is shown as a single trapezoid, but the first compression stage 12 may have a configuration in which the hydrogen gas is compressed and pressurized by the reciprocating motion of the pistons inside each of the plurality of cylinder parts. The same applies to other embodiments.

The succeeding compression stage 14 is a compression mechanism connected to the first compression stage 12 via an intermediate channel 22 for further compressing the hydrogen gas compressed in the first compression stage 12. The hydrogen gas compressed by the succeeding compression stage 14 is discharged to a discharge channel 24. The hydrogen gas flowing through the discharge channel 24 is sent to a high-pressure demand destination D1 or a low-pressure demand destination D2 by switching a demand destination switching means CV1. The hydrogen gas discharged from the compressor unit does not necessarily need to be supplied directly to the high-pressure demand destination D1. For example, after being filled into a cylinder or the like, the hydrogen gas may be supplied to the high-pressure demand destination D1 through various means such as transportation of the cylinder or gas piping connected to the cylinder.

The high-pressure demand destination D1 includes at least one of an engine, power generation facility, or boiler, but may additionally include, for example, a flare system, a vent, and the like that releases gas into the atmosphere.

The low-pressure demand destination D2 is a facility that can process the hydrogen gas at a pressure lower than the pressure of the hydrogen gas required by the high-pressure demand destination D1. The low-pressure demand destination D2 may include, for example, other than a facility that uses gas as an energy source, such as an engine, power generation facility, and boiler, a facility that uses gas at approximately atmospheric pressure such as a flare system and vent.

The succeeding compression stage 14 is also configured using a reciprocating compression mechanism in a similar manner to the first compression stage 12. The succeeding compression stage 14 includes a piston reciprocating inside a cylinder part and is connected to the crank mechanism 16 via a piston rod coupled to the piston.

Note that the succeeding compression stage 14 may be connected to a leak gas exhaust part that returns a leak gas generated inside the compression stage 14 to the suction channel 21. FIG. 1 shows the succeeding compression stage 14 as a single trapezoid for convenience, but the succeeding compression stage 14 does not necessarily have to be a single stage and may include a plurality of compression mechanisms. That is, the succeeding compression stage 14 may be configured such that the hydrogen gas is compressed and pressurized sequentially by the reciprocating motion of the piston inside each of the plurality of cylinder parts connected in serial. The same applies to other embodiments. In the succeeding compression stage 14, the compression stage that discharges the hydrogen gas at room temperature may be either oil-free or lubricated.

As shown in FIG. 1, the compressor unit 10 includes a spillback part SB1 that returns a portion of the hydrogen gas discharged from the succeeding compression stage 14 to the discharge channel 24 to the suction channel 21. The spillback part SB1 includes a spillback channel 18a and a spillback valve 18b including a valve disposed in the spillback channel 18a and having an adjustable opening degree. One end of the spillback channel 18a is connected to the discharge channel 24, while the other end is connected to the suction channel 21. That is, the hydrogen gas that flows through the spillback channel 18a merges with the hydrogen gas from the liquid hydrogen storage tank 23 in the suction channel 21. The spillback valve 18b adjusts a spillback amount in the spillback channel 18a.

The compressor unit 10 includes a low-pressure gas exhaust path 53 that branches at a branching point P_{B} located in the discharge channel 24 and connected to the low-pressure demand destination D2, and the demand destination switching means CV1 that switches the supply destination of the hydrogen gas discharged from the succeeding compression stage 14 between the high-pressure demand destination D1 and the low-pressure demand destination D2. The branching point P_{B} is disposed in a region upstream of the place where the spillback channel 18a is connected in the discharge channel 24. A check valve 54 is provided downstream of the branching point P_{B} in the discharge channel 24. The check valve 54 may be provided downstream of a connection part of the spillback channel 18a. The check valve 54 is a valve that allows the hydrogen gas to flow from the branching point P_{B} to the high-pressure demand destination D1 while preventing flow in the reverse direction. Therefore, the compressor unit 10 can prevent the hydrogen gas from flowing back from the high-pressure demand destination D1 to the branching point P_{B} and entering the low-pressure gas exhaust path 53.

The demand destination switching means CV1 is configured using an adjusting valve 56a that is capable of opening, closing, and adjusting the opening degree, and is provided in the low-pressure gas exhaust path 53 as one example in the present embodiment. However, the demand destination switching means CV1 may be provided at the branching point P_{B}, or may be provided in a region downstream of the branching point P_{B} in the discharge channel 24. Note that the present embodiment adopts the demand destination switching means CV1 configured using the adjusting valve 56a, but is not limited to this example. For example, the demand destination switching means CV1 configured using an opening and closing valve (on-off valve) that can take two positions of fully open and fully closed can be adopted.

The demand destination switching means CV1 is configured to switch the channel of the hydrogen gas between a state where the hydrogen gas discharged from the succeeding compression stage 14 is transmitted to the high-pressure demand destination D1 (second switching state) and a state where the hydrogen gas is transmitted to the low-pressure demand destination D2 (first switching state).

The compressor unit 10 includes an upstream temperature sensor (second temperature sensor) 45 and an intermediate temperature sensor (first temperature sensor) 46. The upstream temperature sensor 45 is disposed between the connection part of the spillback channel 18a and the first compression stage 12 in the suction channel 21. Therefore, the upstream temperature sensor 45 can acquire a temperature TS2 of the hydrogen gas that is suctioned into the first compression stage 12 after the hydrogen gas from the liquid hydrogen storage tank 23 merges with the hydrogen gas from the spillback channel 18a when the hydrogen gas flows through the spillback channel 18a.

The intermediate temperature sensor 46 is arranged in the intermediate channel 22 that connects the first compression stage 12 to the succeeding compression stage 14. Therefore, the intermediate temperature sensor 46 can acquire a temperature TS1 of the hydrogen gas flowing through the intermediate channel 22.

Each of the upstream temperature sensor 45 and the intermediate temperature sensor 46 transmits acquired temperature information to a controller 50. The controller 50 is configured using a microprocessor including an MPU/CPU, ASIC, ROM, RAM, and the like, and controls various operations of the compressor unit 10 by executing firmware and the like stored in a memory in advance. The controller 50 includes a first controller 50a and a second controller 50b, each of which is a functional unit. The first controller 50a is a functional unit configured to control the demand destination switching means CV1 with reference to the temperature TS1 of the hydrogen gas acquired by the intermediate temperature sensor 46. The second controller 50b is a functional unit configured to control the spillback valve 18b with reference to the temperature TS2 of the hydrogen gas acquired by the upstream temperature sensor 45.

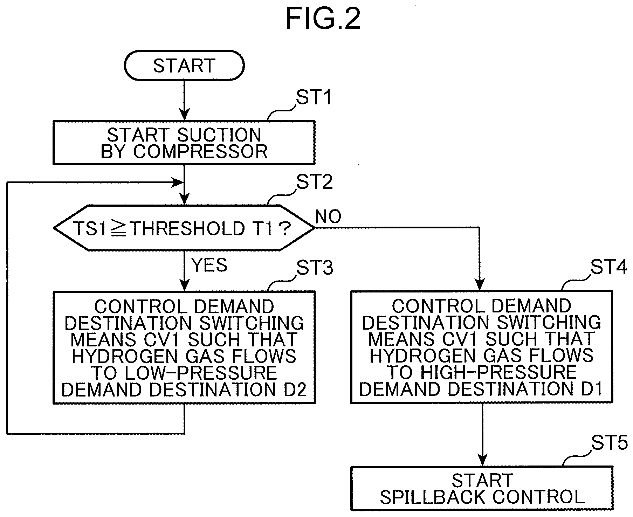

Here, the operation control executed by the controller 50 in the operation of the compressor unit 10 according to the present embodiment will be described with reference to FIG. 2.

The controller 50 determines whether the compressor unit 10 is already in operation or whether there is a driving command when not in operation.

When there is a startup command for the compressor unit 10, the controller 50 activates the crank mechanism 16. This drives the first compression stage 12 and the succeeding compression stage 14 (step ST1). In the first compression stage 12 and the succeeding compression stage 14, the piston reciprocates inside the cylinder part by the operation of the crank mechanism 16. As a result, in the first compression stage 12, the hydrogen gas in the suction channel 21 is suctioned into the first compression stage 12, while in the succeeding compression stage 14, the hydrogen gas in the intermediate channel 22 is suctioned into the succeeding compression stage 14. In the compressor unit 10, the hydrogen gas is compressed in this way.

When the compressor unit 10 starts up, the temperature TS1 of the hydrogen gas flowing through the intermediate channel 22 (discharged from the first compression stage 12) is acquired by the intermediate temperature sensor (first temperature sensor) 46. At this time, the controller 50 refers to the temperature TS1 and determines whether the temperature TS1 is equal to or higher than a predetermined first temperature threshold T1 (step ST2). Here, the predetermined first temperature threshold T1 is a temperature higher than 0°C.

When the controller 50 determines YES (temperature TS1 ≥ threshold T1) in step ST2, the first controller 50a controls the demand destination switching means CV1 such that the hydrogen gas discharged from the succeeding compression stage 14 to the discharge channel 24 flows into the low-pressure gas exhaust path 53 (step ST3). As a result, the hydrogen gas discharged from the succeeding compression stage 14 to the discharge channel 24 passes through the low-pressure gas exhaust path 53 and then is sent to the low-pressure demand destination D2 (first switching state). That is, during startup (step ST2: YES) when the hydrogen gas in the piping downstream of the first compression stage 12 is at room temperature or higher (step ST2: YES), the compressor unit 10 does not send the compressed hydrogen gas to the high-pressure demand destination D1 but to the low-pressure demand destination D2 (step ST3). As a result, during startup of the succeeding compression stage 14, when the temperature of the suction gas in the succeeding compression stage 14 is high, the compressor can be protected from excessive discharge temperature rise caused by pressurizing to a high pressure.

On the other hand, when the controller 50 determines NO (temperature TS1 < threshold T1) in step ST2, the first controller 50a controls the demand destination switching means CV1 such that the hydrogen gas discharged from the succeeding compression stage 14 to the discharge channel 24 flows into the high-pressure demand destination D1 (step ST4). That is, the supply destination of the hydrogen gas discharged from the succeeding compression stage 14 to the discharge channel 24 is switched from the low-pressure demand destination D2 to the high-pressure demand destination D1 (second switching state). Note that the first switching state corresponds to the startup of the compressor unit 10, while the second switching state corresponds to the steady operation of the compressor unit 10.

During the steady operation of the compressor unit 10, the temperature TS2 (suction temperature) of the hydrogen gas that is suctioned into the first compression stage 12 is acquired by the upstream temperature sensor (second temperature sensor) 45. The controller 50 can start spillback control while referring to the suction temperature TS2 (step ST5). That is, when the demand destination switching means CV1 is in the second switching state (step ST4), the hydrogen gas in the suction channel 21 is heated such that the suction temperature TS2 falls within a temperature range determined in advance (T_{TH1} ≤ TS2 ≤ T_{TH2}).

In more detail, when TS2 < T_{TH1}, the second controller 50b controls the spillback valve 18b such that a portion of the gas in the discharge channel 24 is returned to the suction channel 21, or the amount returned is increased. This ensures that the suction temperature TS2 is within the above temperature range. Note that when TS2 > T_{TH2}, the operation of returning a portion of the gas from the discharge channel 24 to the suction channel 21 is not performed, or the amount returned is reduced.

Here, the temperature range determined in advance is set to a range higher than a reference temperature based on the liquefaction temperature of air and lower than 0°C. That is, the lower limit T_{TH1} and the upper limit T_{TH2} of the temperature range determined in advance are set within a range higher than the reference temperature and lower than 0°C.

When the second controller 50b controls the spillback valve 18b to be in an open state and the spillback control is executed (execute step ST5) as described above, the hydrogen gas from the liquid hydrogen storage tank 23 is not directly introduced into the first compression stage 12. In this case, the hydrogen gas from the liquid hydrogen storage tank 23 and the hydrogen gas compressed in the succeeding compression stage 14 merge, and the resulting hydrogen gas is heated and introduced into the first compression stage 12. Moreover, the suction temperature TS2 is adjusted to be equal to or higher than the lower limit T_{TH1} of the temperature range determined in advance, which is set in a range higher than the reference temperature based on the liquefaction temperature of air. Therefore, the first compression stage 12 can be prevented from being exposed to the hydrogen gas at extremely low temperature (temperature lower than the temperature range determined in advance). This prevents the density of the hydrogen gas that is suctioned into the first compression stage 12 from becoming excessively high.

The compressor unit 10 having the above-mentioned configuration is protected in an environment where the boil-off gas (hydrogen gas) is at low temperatures, and is protected during startup when the boil-off gas (hydrogen gas) is at room temperature.

Here, in the compression stages 12 and 14 each configured using a reciprocating compressor, the boil-off gas (hydrogen gas) is discharged from the compression stages 12 and 14 at a pressure corresponding to the pressure of the supply destination of the boil-off gas. Under such premises, in the compressor unit 10 according to the present embodiment, when the hydrogen gas in the piping on the liquid hydrogen storage tank 23 side rises to the positive temperature area (ordinary temperature) during startup, the controller 50 switches the demand destination switching meansCV1 to the first switching state. By the controller 50 switching the demand destination switching means CV1 to the first switching state, the hydrogen gas discharged from the succeeding compression stage 14 flows to the low-pressure demand destination D2. Therefore, since the hydrogen gas is sent toward the low-pressure demand destination D2 where the hydrogen gas is processed at a relatively low pressure, the compression ratios in the compression stages 12 and 14 can be kept low, preventing excessive temperature rise of the hydrogen gas due to an increase in the temperature of the hydrogen gas in the compression stages 12 and 14. Therefore, the compression stages 12 and 14 can be protected.

Even when the hydrogen gas in the piping on the liquid hydrogen storage tank 23 side is at ordinary temperature during startup of the compressor unit 10, it is possible to quickly start the compressor unit 10 by exhausting the hydrogen gas from the compression stages 12 and 14 toward the low-pressure demand destination D2, as described above.

Meanwhile, in the compressor unit 10 according to the present embodiment, when the demand destination switching means CV1 is in the second switching state, the hydrogen gas returned by the spillback part SB1 to the suction channel 21 allows the suction temperature TS2 to be kept within the temperature range determined in advance (T_{TH1} ≤ TS2 ≤ T_{TH2}). In the compressor unit 10, the lower limit T_{TH1} of the temperature range is set in a range higher than the reference temperature based on the liquefaction temperature of air. Therefore, it is possible to avoid liquefaction of oxygen, which is an oxidizing gas, on the outer surface of the suction part of the first compression stage 12 or around devices to which the hydrogen gas is supplied.

In the compressor unit 10, the discharge channel 24 is provided with the check valve 54, making it possible to prevent backflow of the hydrogen gas from the high-pressure demand destination D1 side to the succeeding compression stage 14 in the discharge channel 24, and to properly protect the compressors (first compression stage 12 and succeeding compression stage 14).

If the compressor unit 10 is adopted, efficient recovery/supply of the hydrogen gas is possible.

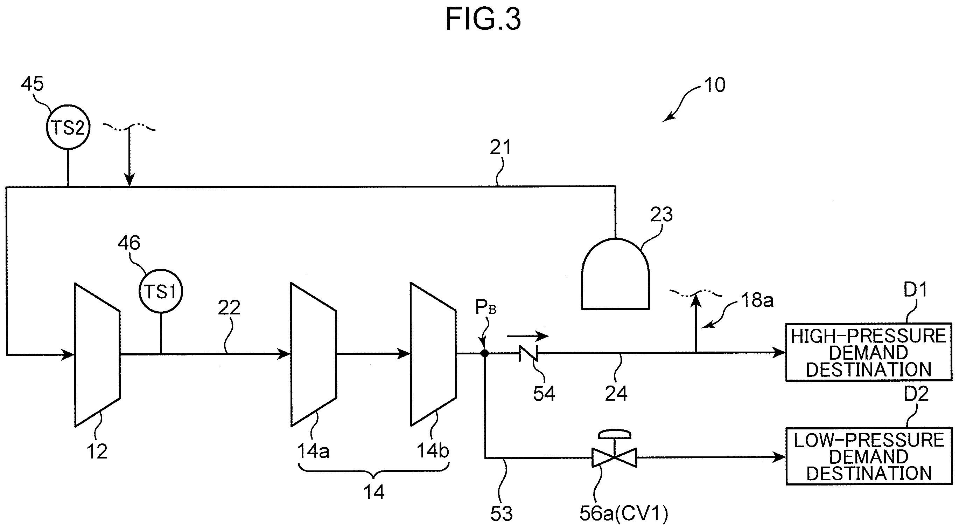

Note that in the compressor unit shown in FIG. 1, the succeeding compression stage 14 includes a compression mechanism having one stage, but may include a compression mechanism having multiple stages. For example, as shown in FIG. 3, a succeeding first compression stage 14a and a succeeding second compression stage 14b may constitute the succeeding compression stage 14. However, the succeeding compression stage 14 may include a compression mechanism having three or more stages. That is, the compressor unit 10 as a whole may include a compression mechanism having four or more stages.

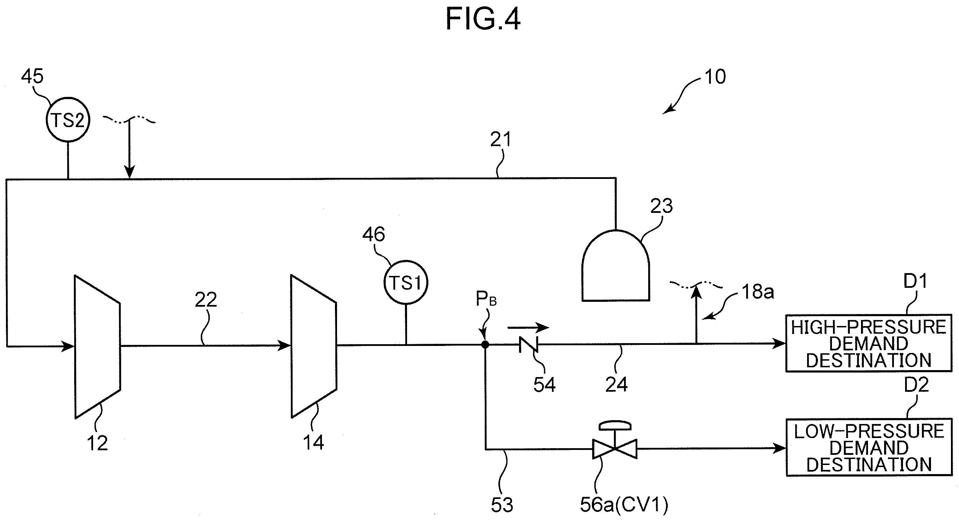

In the compressor unit 10 shown in FIG. 1, the intermediate temperature sensor (first temperature sensor) 46 is disposed in the intermediate channel 22, but the position of the intermediate temperature sensor 46 is not limited to this example. For example, as shown in FIG. 4, the intermediate temperature sensor 46 may be disposed in a region upstream of the branching point P_{B} in the discharge channel 24. In this case, the temperature of the hydrogen gas in the intermediate channel 22 can be estimated by using the intermediate temperature sensor 46 disposed in the discharge channel 24, and the determination in step ST2 can be performed by using the estimated temperature of the hydrogen gas in the intermediate channel 22.

### (Second Embodiment)

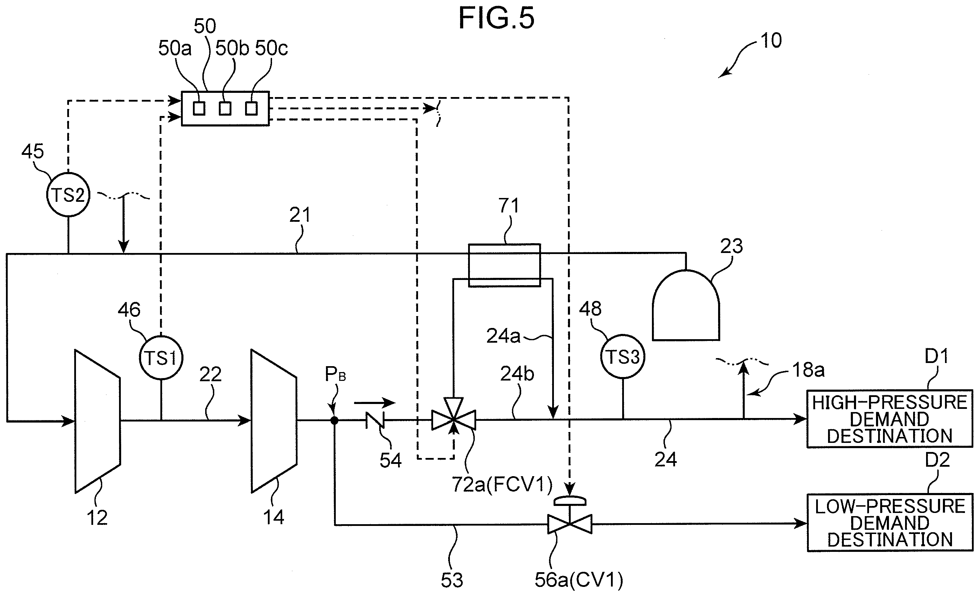

As shown in FIG. 5, a compressor unit 10 according to the second embodiment differs from that of the first embodiment in including a preheater 71 capable of heat exchange between a hydrogen gas flowing through a suction channel 21 (hydrogen gas suctioned into a first compression stage 12) and a hydrogen gas after being discharged from a succeeding compression stage 14 into a discharge channel 24. In FIG. 5, the same component as in the first embodiment is denoted with the same reference sign, and the description of overlapping parts will be omitted below.

As shown in FIG. 5, the discharge channel 24 includes a first channel 24a and a second channel 24b that branch on an upstream side of the region where a spillback channel 18a is connected. The preheater 71 is provided between the first channel 24a, which is one of the channels, and the suction channel 21. This allows the preheater 71 to perform heat exchange between the hydrogen gas flowing through the first channel 24a and the hydrogen gas flowing through the suction channel 21.

A flow rate adjusting means FCV1 is provided at a branching point of the first channel 24a and the second channel 24b in the discharge channel 24. The flow rate adjusting means FCV1 is configured using a three-way valve 72a as one example in the present embodiment. The flow rate adjusting means FCV1 can allow the hydrogen gas discharged from the succeeding compression stage 14 to flow into one of the first channel 24a and the second channel 24b, and can adjust the amount of hydrogen gas flowing into the first channel 24a while allowing the hydrogen gas to flow into both the first channel 24a and the second channel 24b. However, as long as the hydrogen gas can be appropriately split between the first channel 24a and the second channel 24b, the flow rate adjusting means FCV1 is not limited to the three-way valve 72a.

The compressor unit 10 according to the present embodiment also includes a downstream temperature sensor (third temperature sensor) 48 arranged downstream of the preheater 71 in the discharge channel 24. The downstream temperature sensor 48 can acquire a temperature TS3 of the hydrogen gas flowing through the portion downstream of the preheater 71 in the discharge channel 24. Temperature information acquired by the downstream temperature sensor 48 is transmitted to a controller 50.

In the compressor unit 10, in addition to a first controller 50a and a second controller 50b, the controller 50 includes a third controller 50c, which is a functional unit. The third controller 50c is a functional unit configured to control the flow rate adjusting means FCV1 with reference to the temperature TS3 of the hydrogen gas acquired by the downstream temperature sensor 48.

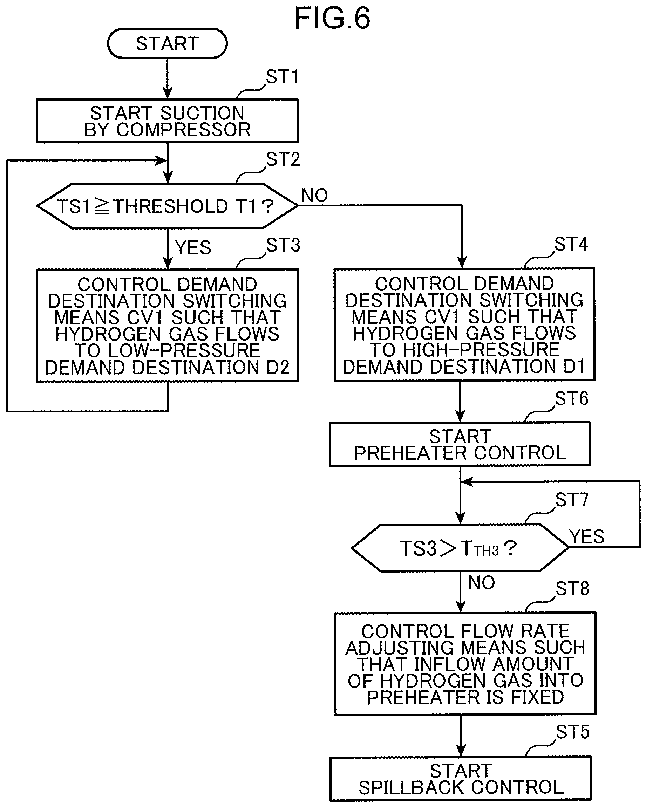

Here, the operation control executed by the controller 50 in the operation of the compressor unit 10 according to the present embodiment will be described with reference to FIG. 6. Note that in the following description, the operation of the controller 50 during startup (steps ST1 to ST3) is the same as in the above first embodiment, and the description thereof will be omitted.

When the steady operating state is achieved (temperature TS1 < threshold T1, NO in step ST2), the controller 50 controls a demand destination switching means CV1 such that the hydrogen gas flows toward a high-pressure demand destination D1 (step ST4).

The controller 50 starts preheater control while referring to a suction temperature TS2 acquired by an upstream temperature sensor 45 (step ST6). That is, when TS2 < T_{TH1}, the third controller 50c controls the flow rate adjusting means FCV1 such that the hydrogen gas discharged from the succeeding compression stage 14 to the discharge channel 24 flows into the first channel 24a and passes through the preheater 71 (step ST6). Then, in a state where the hydrogen gas passes through the preheater 71, the controller 50 determines whether the temperature TS3 acquired by the downstream temperature sensor 48 is higher than a temperature T_{TH3} (step ST7). When the controller 50 determines YES (temperature TS3 > T_{TH3}) in step ST7, the third controller 50c continues to maintain the state in which the hydrogen gas flows into the preheater 71. The heat exchange in the preheater 71 is continuously performed. Note that when TS2 > T_{TH2}, the preheater control will not be performed.

On the other hand, when the controller 50 determines NO (temperature TS3 ≤ T_{TH3}) in step ST7, the flow rate adjusting means FCV1 is controlled to fix the inflow amount of the hydrogen gas into the preheater 71 (step ST8), and then the spillback control is started (step ST5). That is, the second controller 50b controls a spillback valve 18b such that a portion of the gas in the discharge channel 24 is returned to the suction channel 21. In this way, when the controller 50 determines NO in step ST7, in addition to the heating of the hydrogen gas by the preheater 71, the heating of the hydrogen gas using a spillback part SB1 is executed. As a result, the suction temperature TS2 is adjusted to be equal to or higher than the lower limit T_{TH1} of the temperature range determined in advance.

The compressor unit 10 having the above-mentioned configuration performs control to prioritize the heating of the hydrogen gas in the suction channel 21 by the preheater 71 over the heating of the hydrogen gas by a spillback part SB1, and if the heating is insufficient, to perform control to supplement the heating by the spillback part SB1. This allows the power loss associated with returning the hydrogen gas to the suction side to be minimized, as compared with the case where heating is performed only by the spillback part SB1. Therefore, the compressor unit 10 can manage the suction temperature TS2 within a certain range while suppressing a decrease in processing efficiency.

The compressor unit 10 acquires the temperature TS3 of the hydrogen gas downstream of the preheater 71 in the discharge channel 24 by using the downstream temperature sensor 48, and the third controller 50c controls the flow rate adjusting means FCV1 based on the temperature TS3 of the hydrogen gas acquired by the downstream temperature sensor 48, thereby suppressing excessive temperature drop of the hydrogen gas supplied to the high-pressure demand destination D1.

If the compressor unit 10 is adopted, efficient recovery/supply of the hydrogen gas is possible.

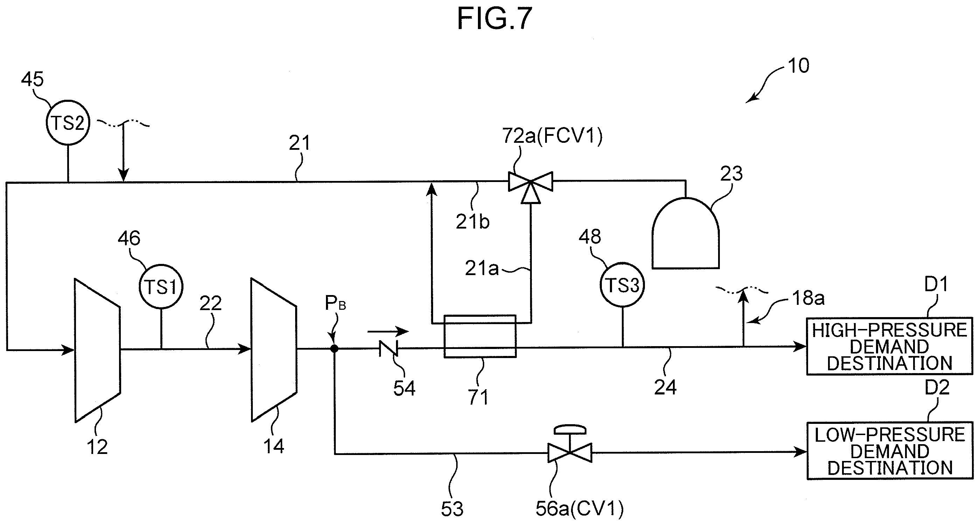

Note that the compressor unit 10 shown in FIG. 5 has the configuration as one example in which the discharge channel 24 branches into the first channel 24a and the second channel 24b, and the preheater 71 is provided in the first channel 24a; however, the arrangement form of the preheater 71 is not limited to this example. For example, as shown in FIG. 7, the suction channel 21 may be branched into a first channel 21a and a second channel 21b, and the preheater 71 may be provided to be connected to one of the branched channels (first channel 21a) and the discharge channel 24. In this case, at the branching point of the first channel 21a and the second channel 21b in the suction channel 21, the flow rate adjusting means FCV1 that can adjust the amount of hydrogen gas flowing into the preheater 71 may be provided.

In the compressor unit 10 shown in FIGS. 5 and 7, the succeeding compression stage 14 includes a compression mechanism having one stage, but may also include a compression mechanism having multiple stages. That is, the compressor unit 10 as a whole may include a compression mechanism having three or more stages.

### (Third Embodiment)

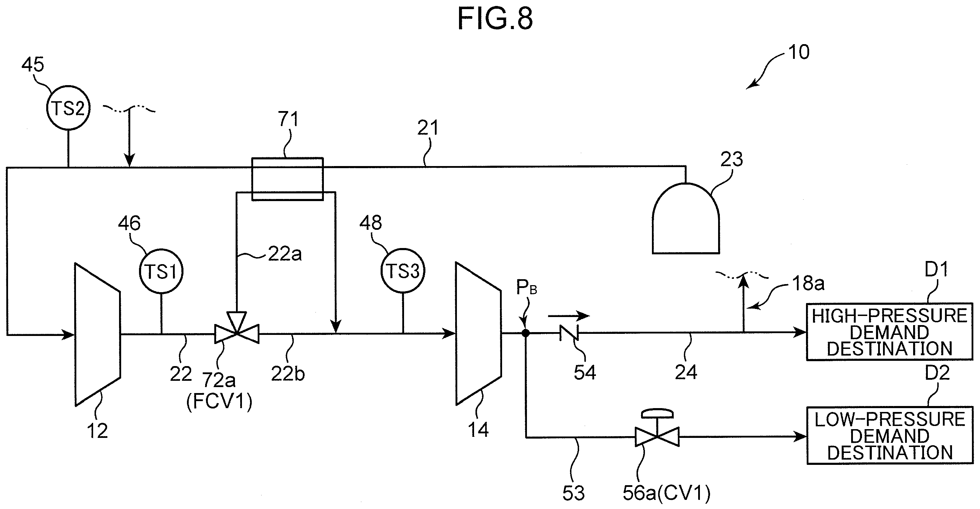

As shown in FIG. 8, a compressor unit 10 according to the third embodiment differs from that of the second embodiment in that a preheater 71 is provided to enable heat exchange between hydrogen gases in an intermediate channel 22 and a suction channel 21. In FIG. 8, the same component as in the above second embodiment is denoted with the same reference sign, and the description of overlapping parts will be omitted below.

In the compressor unit 10, the intermediate channel 22 branches into a first channel 22a and a second channel 22b in a region downstream of where an intermediate temperature sensor 46 is disposed. In the compressor unit 10 according to the present embodiment, the preheater 71 is provided to be connected to the first channel 22a in the intermediate channel 22 and the suction channel 21.

A flow rate adjusting means FCV1 is provided at a branching point between the first channel 22a and the second channel 22b in the intermediate channel 22, or the like. In the compressor unit 10, a downstream temperature sensor 48 is arranged between the preheater 71 and a succeeding compression stage 14. The downstream temperature sensor 48 acquires a temperature TS3 of the hydrogen gas that is suctioned into the succeeding compression stage 14.

In the operation of the compressor unit 10 according to the present embodiment, a controller 50 executes control similar to that of the second embodiment. That is, the control similar to that described with reference to FIG. 6 is executed.

The compressor unit 10 having the above-described configuration includes the preheater 71 that can perform heat exchange between the hydrogen gas before being suctioned into a first compression stage 12 and the hydrogen gas flowing through the intermediate channel 22. In a similar manner to the above second embodiment, the compressor unit 10 also performs control to prioritize the heating of the hydrogen gas in the suction channel 21 by the preheater 71 over the heating of the hydrogen gas by a spillback part SB1, and if the heating is insufficient, to perform control to supplement the heating by the spillback part SB1. This allows the power loss associated with returning the compressed hydrogen gas to the suction side to be minimized, as compared with the case where heating is performed only by the spillback part SB1. Furthermore, a decrease in the gas temperature at an inlet of the succeeding compression stage 14 (in more detail, the second-stage compression mechanism located downstream of the first compression stage 12) results in a reduction in the volume of the gas, decreasing the compression power in the succeeding compression stage 14 as well. Therefore, the compressor unit 10 can manage a suction temperature TS2 within a certain range while suppressing a decrease in processing efficiency.

The compressor unit 10 acquires the temperature TS3 of the hydrogen gas downstream of the preheater 71 in the intermediate channel 22 by using the downstream temperature sensor 48, and a third controller 50c controls the flow rate adjusting means FCV1 based on the temperature TS3 of the hydrogen gas acquired by the downstream temperature sensor 48, thereby suppressing excessive temperature drop of the hydrogen gas supplied to a high-pressure demand destination D1.

If the compressor unit 10 is adopted, efficient recovery/supply of the hydrogen gas is possible.

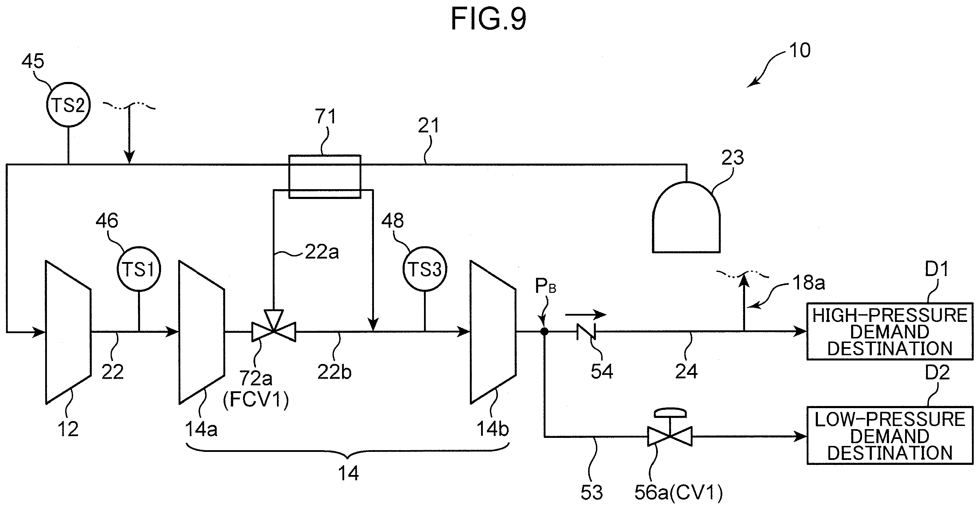

Note that in the compressor unit 10 shown in FIG. 8, the succeeding compression stage 14 includes a compression mechanism having one stage, but may include a compression mechanism having multiple stages. For example, as shown in FIG. 9, a succeeding first compression stage 14a and a succeeding second compression stage 14b may constitute the succeeding compression stage 14. In this case, the region between the succeeding first compression stage 14a and the succeeding second compression stage 14b in the intermediate channel 22 may be branched into the first channel 22a and the second channel 22b. The flow rate adjusting means FCV1 may be provided at the branching point between the first channel 22a and the second channel 22b, or the like. Adopting this configuration enables heat exchange between the hydrogen gas discharged from the succeeding first compression stage 14a and the hydrogen gas flowing through the suction channel 21.

However, the succeeding compression stage 14 may include a compression mechanism having three or more stages. That is, the compressor unit 10 as a whole may include a compression mechanism having four or more stages. In a configuration including the compression mechanism having four or more stages, the preheater 71 may be provided in a region on the suction side of the final-stage compression mechanism in the intermediate channel 22.

### (Fourth Embodiment)

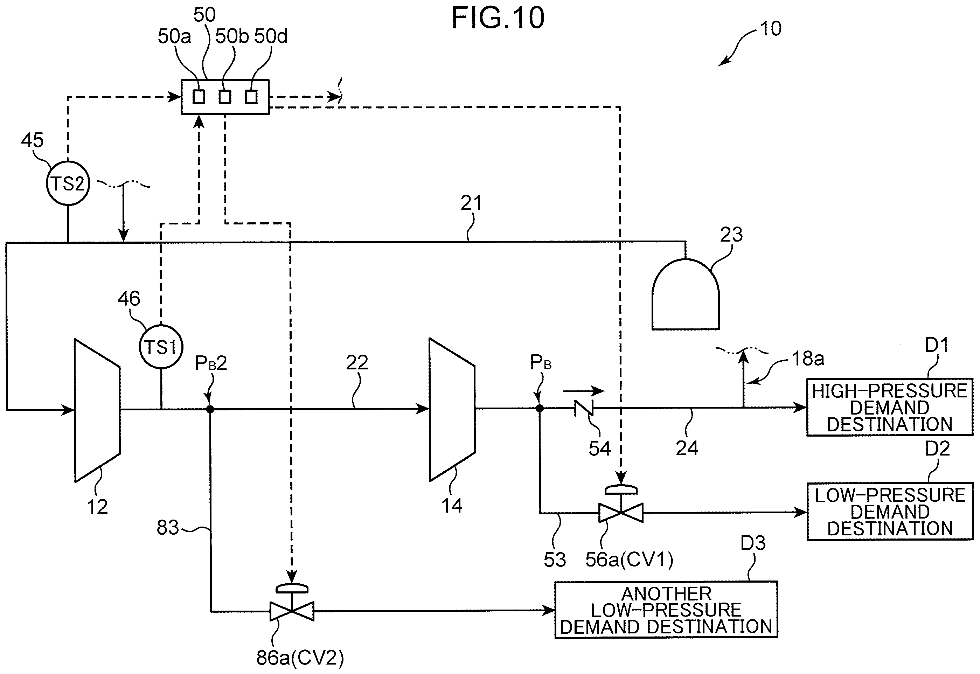

A compressor unit 10 according to the fourth embodiment shown in FIG. 10 further includes a second low-pressure gas exhaust path 83, which is an other low-pressure gas exhaust path. The second low-pressure gas exhaust path 83 branches at an other branching point P_{B}2, which is the other branching point P_{B}2 arranged in an intermediate channel 22, and is connected to a second low-pressure demand destination (an other low-pressure demand destination) D3.

The compressor unit 10 according to the fourth embodiment differs from that in the first embodiment in that, during startup, a hydrogen gas is sent to a low-pressure demand destination D2 and the second low-pressure demand destination D3. In FIG. 10, the same component as in the first embodiment is denoted with the same reference sign, and the description of overlapping parts will be omitted below.

The second low-pressure demand destination D3 is a facility that can process the hydrogen gas at a pressure lower than the pressure of the hydrogen gas required by the high-pressure demand destination D1. The second low-pressure demand destination D3 may include, for example, other than a facility that uses gas as an energy source, such as an engine, power generation facility, and boiler, a facility that uses gas at approximately atmospheric pressure such as a flare system and vent.

The compressor unit 10 further includes a second demand destination switching means CV2 that switches the channel of the hydrogen gas discharged from a first compression stage 12 between the channel to a succeeding compression stage 14 and the second low-pressure gas exhaust path 83. The second demand destination switching means CV2 is other demand destination switching means. The second demand destination switching means CV2 is configured using an adjusting valve 86a as one example in the present embodiment and is provided in the second low-pressure gas exhaust path 83. Note that the present embodiment adopts the second demand destination switching means CV2 configured using the adjusting valve 86a having an adjustable opening degree, but is not limited to this example. For example, the second demand destination switching means CV2 configured using an opening and closing valve (on-off valve) that can take two positions of fully open and fully closed can be adopted.

In the compressor unit 10, in addition to a first controller 50a and a second controller 50b, a controller 50 includes a fourth controller 50d, which is a functional unit. The fourth controller 50d is a functional unit configured to control the second demand destination switching means CV2 with reference to a temperature TS1 of the hydrogen gas acquired by an intermediate temperature sensor 46.

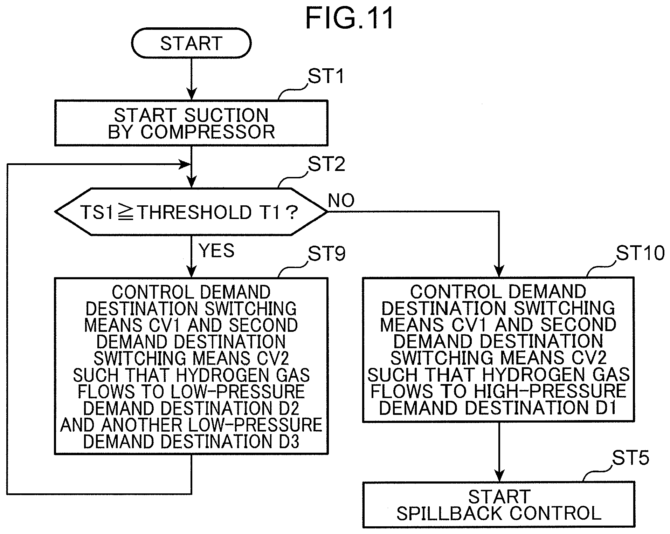

Here, the operation control executed by the controller 50 in the operation of the compressor unit 10 according to the present embodiment will be described with reference to FIG. 11. Note that in the following description, the description that overlaps with the above first embodiment will be partially omitted.

When the controller 50 determines YES (temperature TS1 ≥ threshold T1) in step ST2, that is, during startup, the first controller 50a controls a demand destination switching means CV1 to the first switching state such that the hydrogen gas discharged from the succeeding compression stage 14 to a discharge channel 24 flows into the low-pressure demand destination D2. Furthermore, the fourth controller 50d controls the second demand destination switching means CV2 such that a portion of the hydrogen gas discharged from the first compression stage 12 to the intermediate channel 22 flows into the second low-pressure demand destination D3 (step ST9). In this way, in the first switching state in which the hydrogen gas discharged from the succeeding compression stage 14 to the discharge channel 24 passes through a low-pressure gas exhaust path 53 and flows to the low-pressure demand destination D2, a portion of the hydrogen gas discharged from the first compression stage 12 to the intermediate channel 22 passes through the second low-pressure gas exhaust path 83 and flows to the second low-pressure demand destination D3.

On the other hand, when the controller 50 determines NO (temperature TS1 < threshold T1) in step ST2, the fourth controller 50d controls the demand destination switching means CV1 and the second demand destination switching means CV2 such that the hydrogen gas discharged from the succeeding compression stage 14 to the discharge channel 24 flows into the high-pressure demand destination D1 (step ST10). That is, when the steady operating state is achieved, the hydrogen gas compressed by the first compression stage 12 and the succeeding compression stage 14 is sent to the high-pressure demand destination D1 (second switching state). In the steady operating state, step ST5 executed by the second controller 50b (step of starting spillback control) is similar to that in the first embodiment.

In the compressor unit 10 having the above configuration, the controller 50 controls the demand destination switching means CV1 to switch between the first switching state and the second switching state. This allows the compressor unit 10 to exhaust the hydrogen gas not only to the low-pressure gas exhaust path 53 but also to the second low-pressure gas exhaust path (an other low-pressure gas exhaust path) 83 in the first switching state. Therefore, the compressor unit 10 according to the present embodiment can lower the pressure of the hydrogen gas in the intermediate channel 22, as compared with the case where the second low-pressure gas exhaust path 83 is not provided. Therefore, the compressor unit 10 can lower the suction pressure of the succeeding compression stage 14 disposed on the downstream side of the intermediate channel 22 and reduce the power during startup.

If the compressor unit 10 is adopted, efficient recovery/supply of the hydrogen gas is possible.

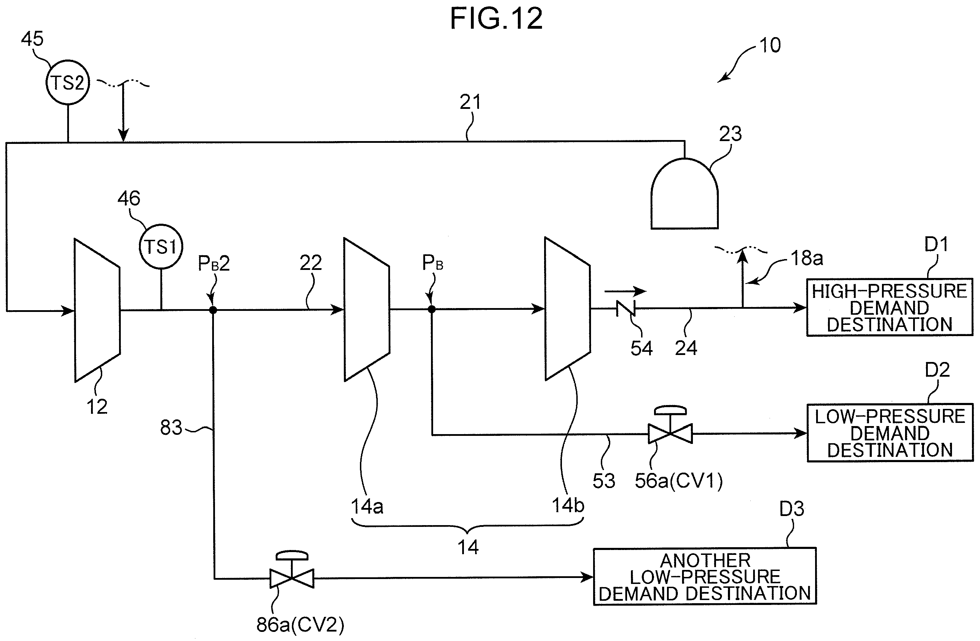

Note that in the compressor unit 10 shown in FIG. 10, the succeeding compression stage 14 includes a compression mechanism having one stage, but may include a compression mechanism having multiple stages. For example, as shown in FIG. 12, a succeeding first compression stage 14a and a succeeding second compression stage 14b may constitute the succeeding compression stage 14. Here, in the compressor unit 10 shown in FIG. 12, the gas channel between the first compression stage 12 and the succeeding second compression stage 14b is the intermediate channel 22. When this configuration is adopted, the branching point P_{B} where the low-pressure gas exhaust path 53 branches may be disposed at a position between the succeeding first compression stage 14a and the succeeding second compression stage 14b in the intermediate channel 22, rather than in the discharge channel 24.

However, the succeeding compression stage 14 may include a compression mechanism having three or more stages. That is, the compressor unit 10 as a whole may include a compression mechanism having four or more stages. In this case as well, the gas channel between the first compression stage 12 and the final-stage compression mechanism that constitutes the succeeding compression stage 14 is the intermediate channel 22. In a configuration including the compression mechanism having four or more stages, the branching point P_{B} may be disposed at a position on the suction side of the final-stage compression mechanism in the intermediate channel 22.

### (Fifth Embodiment)

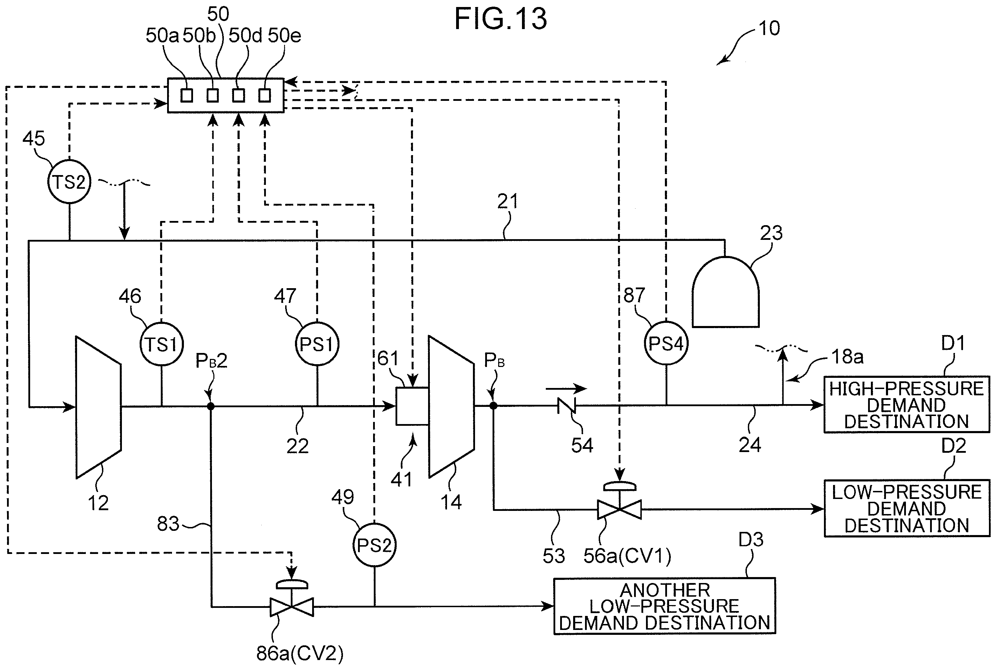

The configuration of a compressor unit 10 according to the fifth embodiment shown in FIG. 13 differs from that of the compressor unit 10 according to the fourth embodiment shown in FIG. 10 in that the structure of a succeeding compression stage 14 is different. The processing of a hydrogen gas in the compressor unit 10 differs from the processing in the compressor unit 10 according to the fourth embodiment in that, during startup, the hydrogen gas is sent only to a low-pressure demand destination D2, whereas during steady operation, the hydrogen gas is sent to a second low-pressure demand destination D3 and a high-pressure demand destination D1. Other points are the same as in the above fourth embodiment, and the same component as in the fourth embodiment is denoted with the same reference sign, and the description of overlapping parts will be omitted below.

The compressor unit 10 includes an adjusting means 41 to adjust the processing amount of the hydrogen gas by the succeeding compression stage 14. The adjusting means 41 adjusts the gas processing amount by methods other than adjusting the rotation speed of a crank mechanism 16. The present embodiment has a configuration in which, as one example, an on-off type suction valve unloader 61 is mounted to adjust the gas flow rate sent toward the high-pressure demand destination D1 in a cylinder part of the succeeding compression stage 14.

In addition, the compressor unit 10 includes an intermediate pressure sensor (second pressure sensor) 47, an exhaust path pressure sensor (pressure sensor) 49, and a discharge path pressure sensor (fourth pressure sensor) 87. The intermediate pressure sensor 47 is arranged on the suction side of the succeeding compression stage 14 in an intermediate channel 22, and acquires pressure PS1 of the hydrogen gas flowing through the portion. The discharge path pressure sensor 87 is disposed in a discharge channel 24 and acquires pressure PS4 of the hydrogen gas flowing through the discharge channel 24. The exhaust path pressure sensor 49 is disposed in a second low-pressure gas exhaust path 83 and acquires pressure PS2 of the hydrogen gas flowing through the second low-pressure gas exhaust path 83. Respective pressure sensors 47, 87, and 49 send acquired pressure information to a controller 50.

The controller 50 includes a fifth controller 50e, which is a functional unit, in addition to a first controller 50a, a second controller 50b, and a fourth controller 50d. To the controller 50, the pressure PS4 of the high-pressure demand destination D1, the pressure PS2 of the second low-pressure demand destination D3, and the pressure PS1 at an inlet of the succeeding compression stage 14 are input, and furthermore, setting values of the intermediate pressure range (pressure threshold a1 and pressure threshold a2) are input. The fifth controller 50e is configured to control the suction valve unloader 61, which is the adjusting means 41, to ensure that the pressure PS1 at the inlet of the succeeding compression stage 14 that varies according to the fluctuation in a gas demand amount of the second low-pressure demand destination D3 or the gas demand amount of the high-pressure demand destination D1 falls within a preset range.

The cylinder part of the succeeding compression stage 14 includes two chambers: a pushing compression chamber that compresses during the pushing stroke of the piston and a pulling compression chamber that compresses during the pulling stroke. The compressor unit 10 includes a capacity adjustment device that individually loads and unloads each compression chamber in the cylinder part. Note that loading the two chambers leads to 100% load, while loading only one chamber leads to 50% load. The fifth controller 50e sends a command to load or unload the suction valve unloader 61 based on the pressure at the inlet of the succeeding compression stage 14 acquired by the second pressure sensor 47.

In the compressor unit 10, when the supply amount to the second low-pressure demand destination D3 increases, the amount of gas processed in the succeeding compression stage 14 decreases, as compared with the case where the supply amount is not present. Therefore, the pressure at the inlet of the succeeding compression stage 14 decreases. That is, the differential pressure between the inlet and outlet of the succeeding compression stage 14 increases as the supply amount to the second low-pressure demand destination increases, and accordingly, the load acting on internal components such as the piston that is reciprocating for compression in the cylinder part in the compression stage increases.

When the pressure PS1 at the inlet of the succeeding compression stage 14 drops below the preset pressure threshold a1, it is possible to increase the pressure PS1 at the inlet by reducing each compression chamber in the cylinder part of the succeeding compression stage 14 from 100% load to 50%. That is, the load acting on the internal component can be reduced. In a state of 50% load, when the pressure PS1 at the inlet rises above the preset pressure threshold a2, it is equivalent to the discharge pressure of a first compression stage 12 rising. Therefore, by increasing the load of the succeeding compression stage 14 to 100%, the load acting on the internal component of the first compression stage 12 can be reduced.

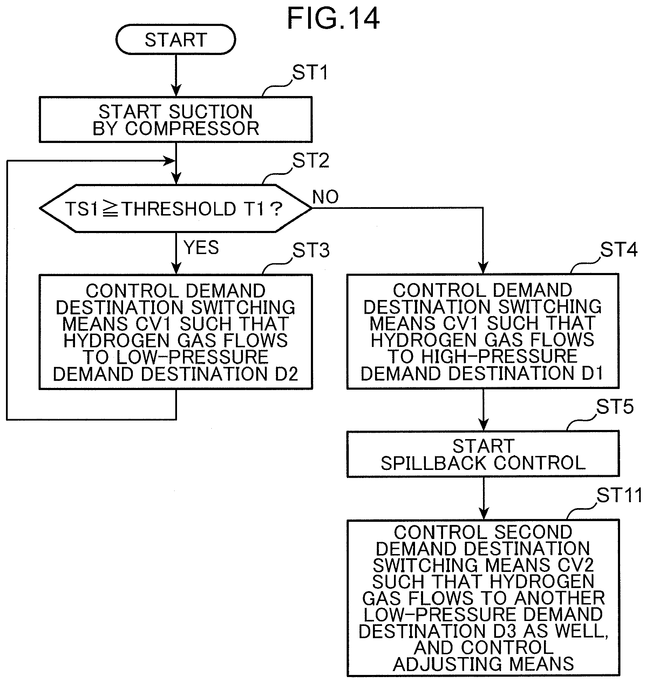

Here, the operation control executed by the controller 50 in the operation of the compressor unit 10 according to the present embodiment will be described with reference to FIG. 14. Note that in the following description, the description that overlaps with the above first embodiment will be partially omitted.

When the controller 50 determines YES (temperature TS1 ≥ threshold T1) in step ST2, the first controller 50a controls a demand destination switching means (CV1) to assume the first switching state. Note that during startup, a second demand destination switching means (CV2) is closed to prevent the hydrogen gas from flowing through the second low-pressure demand destination D3. As a result, the hydrogen gas discharged from the succeeding compression stage 14 to the discharge channel 24 flows only to the low-pressure demand destination D2 (step ST3). This causes the hydrogen gas discharged from the succeeding compression stage 14 to the discharge channel 24 to pass through a low-pressure gas exhaust path 53 and flow to the low-pressure demand destination D2 (first switching state).

When the steady operating state is achieved (temperature TS1 < threshold T1, NO in step ST2), the controller 50 supplies the hydrogen gas to the high-pressure demand destination D1 by setting the demand destination switching means CV1 to the second switching state (step ST4). Then, the second controller 50b starts the control of a spillback valve 18b (step ST5).

Furthermore, the fourth controller 50d and the fifth controller 50e control the second demand destination switching means CV2 and the adjusting means 41 (suction valve unloader) according to the fluctuation in the gas demand amount of the second low-pressure demand destination D3 or the gas demand amount of the high-pressure demand destination D1 (step ST11). That is, the fourth controller 50d controls the second demand destination switching means CV2 such that the hydrogen gas is exhausted into the second low-pressure gas exhaust path 83 according to the fluctuation in the gas demand amount of the second low-pressure demand destination D3 or the gas demand amount of the high-pressure demand destination D1. The fifth controller 50e executes control of the adjusting means 41 such that the pressure PS1 at the inlet of the succeeding compression stage 14 falls within a preset threshold range. Specifically, a load change is performed by the suction valve unloader 61.

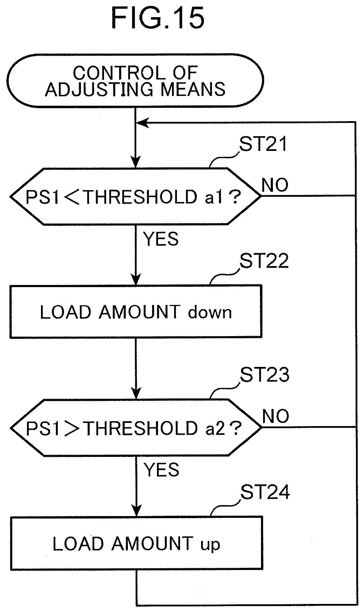

The load change of the suction valve unloader 61 will be described in detail with reference to FIG. 15. When the demand amount of the second low-pressure demand destination D3 increases (in other words, when the demand amount of the high-pressure demand destination D1 decreases), the pressure PS1 detected by the intermediate pressure sensor 47 decreases. In this case, when the pressure PS1 becomes less than the pressure threshold a1 (YES in step ST21), the fifth controller 50e controls the suction valve unloader 61 such that the load changes from 100% to 50% (step ST22). When the demand amount of the second low-pressure demand destination D3 decreases at 50% load (in other words, when the demand amount of the high-pressure demand destination D1 increases), the pressure PS1 detected by the intermediate pressure sensor 47 increases. In conjunction with this, when the pressure PS1 exceeds the pressure threshold a2 (YES in step ST23), the fifth controller 50e controls the suction valve unloader 61 such that the load changes from 50% to 100% (step ST24). Note that if the amount of the second low-pressure demand destination D3 is not changed and is changed according to the demand amount of the high-pressure demand destination D1, the adjustment may be made by the spillback amount by a spillback part SB1.

In the compressor unit 10, particularly when the demand amount of the second low-pressure demand destination D3 increases, excessive decrease in the pressure at the inlet of the succeeding compression stage 14 is prevented, thereby preventing excessive differential pressure from acting on the internal component. In other words, if this control is not executed, it is necessary to prepare a compressor with a large margin sufficient to absorb the changes in the compressor. However, in the compressor unit 10, the margin can be reduced.

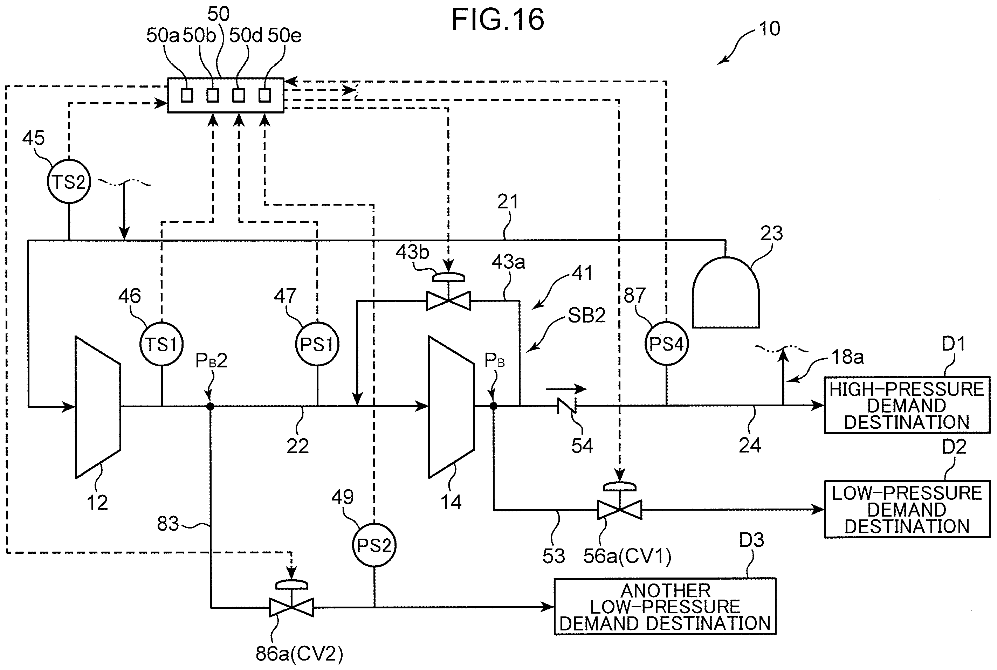

The compressor unit 10 shown in FIG. 16 is provided with, for example, the adjusting means 41 different from FIG. 13. In the present embodiment, as one example, a spillback part (second spillback part) SB2, which adjusts the processing amount of the hydrogen gas such that the gas flow rate sent from the succeeding compression stage 14 to the high-pressure demand destination D1 is adjusted, constitutes the adjusting means 41.

The second spillback part SB2 includes a second spillback channel 43a and a second spillback valve 43b disposed in the second spillback channel 43a and having an adjustable opening degree. One end of the second spillback channel 43a is connected to a region upstream of a position where a check valve 54 is disposed in the discharge channel 24, while the other end is connected to the intermediate channel 22. Therefore, a portion of the hydrogen gas discharged from the succeeding compression stage 14 is returned to the suction side of the succeeding compression stage 14 in the intermediate channel 22. The second spillback valve 43b adjusts the spillback amount in the second spillback channel 43a.

In addition, the compressor unit 10 includes an intermediate pressure sensor (second pressure sensor) 47, an exhaust path pressure sensor (pressure sensor) 49, and a discharge path pressure sensor (fourth pressure sensor) 87. The intermediate pressure sensor 47 is arranged at a position on the suction side of the succeeding compression stage 14 in the intermediate channel 22, and acquires the pressure PS1 of the hydrogen gas flowing through the portion. The discharge path pressure sensor 87 is arranged in a discharge channel 24 and acquires pressure PS4 of the hydrogen gas flowing through the discharge channel 24. The exhaust path pressure sensor 49 is arranged in a second low-pressure gas exhaust path 83 and acquires pressure PS2 of the hydrogen gas flowing through the second low-pressure gas exhaust path 83. Respective pressure sensors 47, 87, and 49 send acquired pressure information to a controller 50.

The controller 50 includes a fifth controller 50e, which is a functional unit, in addition to a first controller 50a, a second controller 50b, and a fourth controller 50d. To the controller 50, the pressure PS4 of the high-pressure demand destination D1, the pressure PS2 of the second low-pressure demand destination D3, and the pressure PS1 at the inlet of the succeeding compression stage 14 are input, and furthermore, setting values of the intermediate pressure (pressure threshold a1 and pressure threshold a2) are input. The fifth controller 50e is a functional unit configured to control the adjusting means 41 (second spillback valve 43b) such that the pressure PS1 at the inlet of the succeeding compression stage 14 that varies according to the fluctuation in the gas demand amount of the second low-pressure demand destination D3 or the gas demand amount of the high-pressure demand destination D1 has a preset value. The setting value of the inlet pressure of the succeeding compression stage 14 may be determined by calculation from the values of PS4 and PS2.

Here, the operation control executed by the controller 50 in the operation of the compressor unit 10 according to the present embodiment will be described with reference to FIG. 14. Note that in the following description, the description that overlaps with the above first embodiment will be partially omitted.

When the steady operating state is achieved (temperature TS1 < threshold T1, NO in step ST2), the controller 50 controls the demand destination switching means CV1 such that the hydrogen gas is supplied to the high-pressure demand destination D1 (step ST4). Then, the second controller 50b controls the spillback valve 18b to start the spillback control (step ST5).

Furthermore, the fourth controller 50d and the fifth controller 50e control the second demand destination switching means CV2 and the adjusting means 41 (second spillback valve 43b) according to the fluctuation in the gas demand amount of the second low-pressure demand destination D3 or the gas demand amount of the high-pressure demand destination D1 (step ST11). That is, the fourth controller 50d controls the second demand destination switching means CV2 such that the hydrogen gas is exhausted into the second low-pressure gas exhaust path 83 according to the fluctuation in the gas demand amount of the second low-pressure demand destination D3 or the gas demand amount of the high-pressure demand destination D1. The fifth controller 50e executes the opening degree adjustment of the second spillback valve 43b such that the gas processing amount in the succeeding compression stage 14 is adjusted.

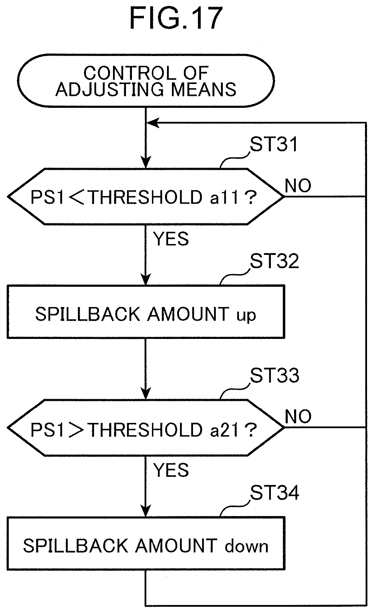

The opening degree adjustment of the second spillback valve 43b will be described in detail with reference to FIG. 17. When the demand amount of the second low-pressure demand destination D3 increases (in other words, when the demand amount of the high-pressure demand destination D1 decreases), the pressure PS1 detected by the intermediate pressure sensor 47 decreases. In conjunction with this, when the pressure PS1 becomes less than a pressure threshold a11 (YES in step ST31), the fourth controller 50d and the fifth controller 50e perform control to increase the spillback amount by the second spillback part SB2 (step ST32). On the other hand, when the demand amount of the second low-pressure demand destination D3 decreases (in other words, when the demand amount of the high-pressure demand destination D1 increases), the pressure PS1 detected by the intermediate pressure sensor 47 increases. In conjunction with this, when the pressure PS1 exceeds the pressure threshold a2 (YES in step ST33), the fourth controller 50d and the fifth controller 50e perform control to decrease the spillback amount by the second spillback part SB2 (step ST34). Note that if the amount of the second low-pressure demand destination D3 is not changed and is changed according to the demand amount of the high-pressure demand destination D1, the adjustment may be made by the spillback amount by a spillback part SB1.

As described above, in response to the fluctuation in the gas demand amount of the second low-pressure demand destination D3 or the gas demand amount of the high-pressure demand destination D1, the exhausting of the hydrogen gas to the second low-pressure demand destination D3 and the adjustment of the gas processing amount in the succeeding compression stage 14 by the second spillback part SB2 will maintain the suction pressure of the succeeding compression stage 14 substantially constant.

In the compressor unit 10, when the required amount (demand amount) of the hydrogen gas in the high-pressure demand destination D1 is reduced, the hydrogen gas is exhausted to the second low-pressure demand destination D3. As a result, the compressor unit 10 can maintain constant pressure in the liquid hydrogen storage tank 23 by balancing the amount of boil-off gas (hydrogen gas) generated from the liquid hydrogen storage tank 23 and the amount of hydrogen gas transmitted from the compressor unit 10.

The compressor unit 10, which includes the adjusting means 41 (second spillback part SB2), allows the suction pressure of the succeeding compression stage 14 to be maintained substantially constant. Therefore, the compressor unit 10 can always maintain a constant pressure balance for each stage of the succeeding compression stage, thereby achieving high reliability of the compressor. That is, if the constant pressure balance in the succeeding compression stage 14 cannot be maintained, it is necessary to prepare a compressor with a large margin that has enough capacity to absorb the change, but the compressor unit 10 does not need to prepare the compressor with a large margin.

If the compressor unit 10 is adopted, efficient recovery/supply of the hydrogen gas is possible. Furthermore, by utilizing the gas obtained by compressing and heating, by the compressor, a heat source that heats the extremely low-temperature suction gas to an appropriate temperature, it is possible to prevent the excess emission of CO2, as compared with the case where, for example, a heater utilizing the combustion heat of fossil fuels is installed on the upstream side of the compressor.

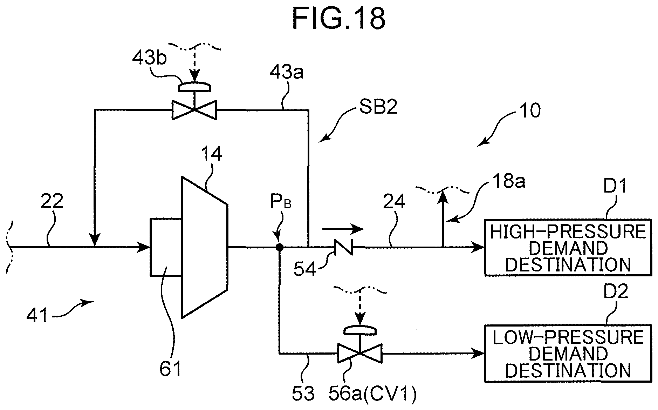

In the compressor unit 10, as shown in FIG. 18, the adjusting means 41 may be configured using the on-off type suction valve unloader 61, similar to that in FIG. 13, and the second spillback part SB2, similar to that in FIG. 16.

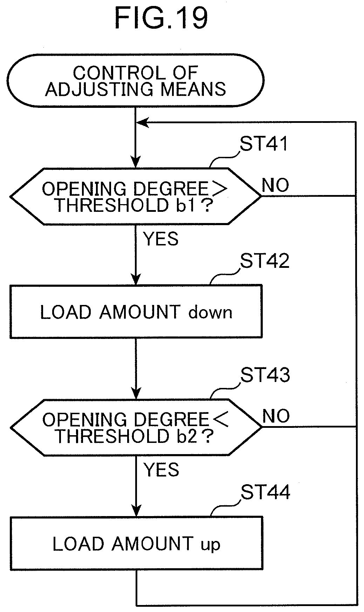

As shown in FIG. 19, in the control of the adjusting means 41, when the state of the second spillback valve 43b (opening degree of the valve) input to the controller 50 becomes greater than a preset opening threshold b1 (indicating a large spillback amount) (YES in step ST41), the suction valve unloader 61 is controlled, and the load amount of the succeeding compression stage 14 is reduced (from 100% to 50%) (step ST42). When the opening degree of the second spillback valve 43b becomes smaller than an opening threshold b2 (YES in step ST43), the suction valve unloader 61 is controlled and the control is executed such that the load amount of the succeeding compression stage 14 is increased (from 50% to 100%) (step ST44). This allows reduction in power by lowering the load of the succeeding compression stage 14 when the spillback is excessive.

If the compressor unit 10 is adopted, efficient recovery/supply of the hydrogen gas is possible.

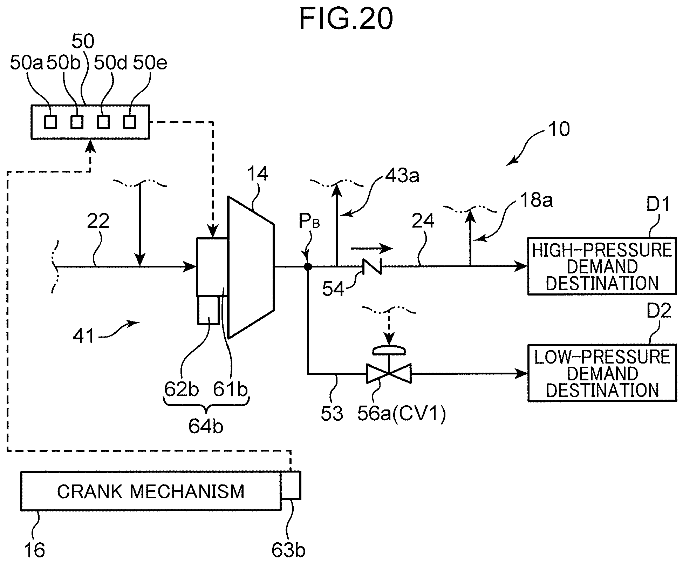

The compressor unit 10 may include a stepless capacity adjustment device 64b provided in the succeeding compression stage 14 as the adjusting means 41, as shown in FIG. 20.

The stepless capacity adjustment device 64b includes a suction valve unloader 61b, a drive device 62b, and a detector 63b that detects the rotation of the crank mechanism. The suction valve unloader 61b is driven by the hydraulic or electric drive device 62b, and can maintain or release the open state of the valve plate of the suction valve at a speed faster than the time it takes for the piston to reciprocate. The controller 50 performs computational processing to estimate the position of the piston based on a signal transmitted from the detector 63b installed in the crank mechanism 16.

In the cylinder part of the succeeding compression stage 14, the suction valve is installed between a suction passage and the compression chamber. This suction valve is configured using a valve plate that opens and closes the gas passage, a valve body that houses the valve plate, and the like. The suction valve of the cylinder part has a structure in which, in a similar manner to the check valve, when the upstream pressure is higher than the downstream pressure, the valve plate opens due to the differential pressure, and when the downstream pressure is higher, the gas does not flow.

The suction valve unloader 61b, when driven, creates a state in which the valve plate of the suction valve is maintained in an open state, preventing the check valve from functioning. Note that when the piston enters the suction stroke without driving the unloader, the pressure in the compression chamber decreases below the pressure in the suction passage, causing the suction valve to be in an open state, and the gas is introduced into the compression chamber side. When the piston enters the compression stroke, the pressure in the compression chamber rises above the pressure in the suction passage, causing the suction valve to be in a closed state.

In the initial stage when the compression stroke starts, by maintaining the open state by the stepless capacity adjustment device 64b, returning a portion of the gas introduced into the compression chamber to the suction passage side, and releasing the open state from the middle of the compression stroke, the suction valve is closed, and at that time, the gas remaining in the compression chamber is compressed and transmitted. Causing a driving unit to drive again during the next piston suction stroke and releasing the open state after the compression stroke of the piston begins are repeated in accordance with the reciprocating motion of the piston.

If the release timing is advanced, the transmission amount increases, and if the release timing is delayed, the transmission amount decreases, thus enabling the same function as the second spillback valve. Furthermore, since the amount of gas to be compressed is adjusted, the effect of reducing the power is great.

When the configuration as shown in FIG. 12 is adopted in which the succeeding compression stage 14 includes the compression mechanism having multiple stages, the second spillback part 43 and the capacity adjustment device 64b may be provided for at least one compression mechanism.

### (Sixth Embodiment)

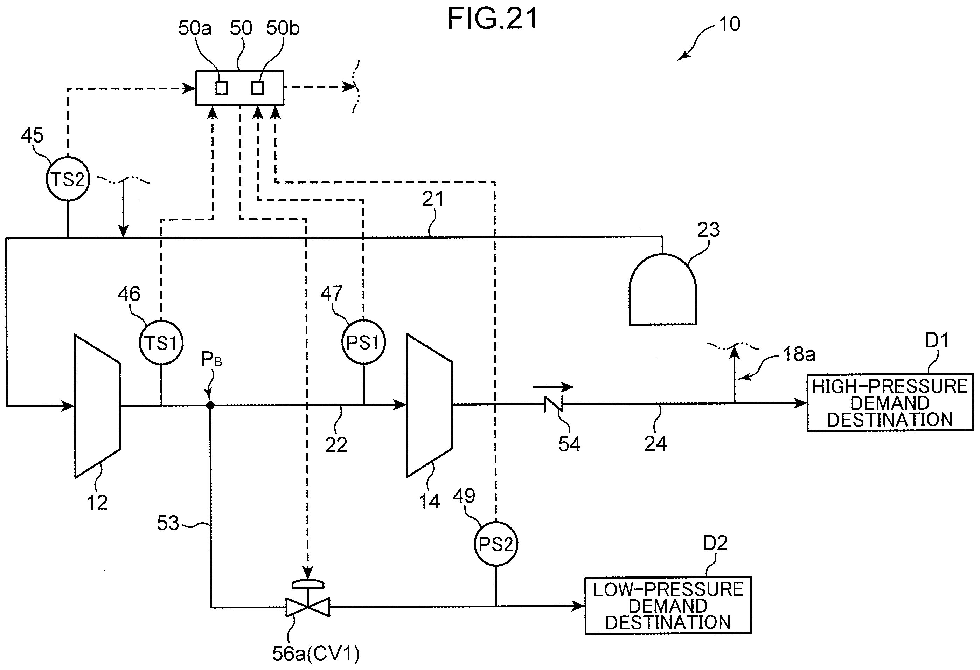

Next, a compressor unit 10 according to the sixth embodiment will be described with reference to FIG. 21. The configuration of the compressor unit 10 differs from the configuration of the compressor unit 10 according to the first embodiment shown in FIG. 1 in that the position of a low-pressure gas exhaust path 53 is arranged in an intermediate channel 22. Furthermore, regarding the processing of hydrogen gas, the compressor unit 10 differs from the compressor unit 10 according to the first embodiment in that, both during startup and steady operation, the hydrogen gas is supplied to a low-pressure demand destination D2 via the low-pressure gas exhaust path 53. In FIG. 21, the same component as in the first embodiment is denoted with the same reference sign, and the description of overlapping parts will be omitted below.

In the compressor unit 10 according to the present embodiment, a branching point P_{B} where the low-pressure gas exhaust path 53 branches is disposed downstream of the position where an intermediate temperature sensor 46 is arranged in the intermediate channel 22. Furthermore, an intermediate pressure sensor 47 is arranged at a downstream position in the intermediate channel 22. The intermediate pressure sensor 47 acquires pressure PS1 of the hydrogen gas that is suctioned into a succeeding compression stage 14 and transmit the pressure PS1 to a controller 50.

The compressor unit 10 also includes an exhaust path pressure sensor 49. The exhaust path pressure sensor 49 is arranged downstream of the position where a demand destination switching means CV1 is provided in the low-pressure gas exhaust path 53. The exhaust path pressure sensor 49 acquires pressure PS2 of the hydrogen gas exhausted to the low-pressure demand destination D2 through the low-pressure gas exhaust path 53 and transmits the pressure PS2 to the controller 50.

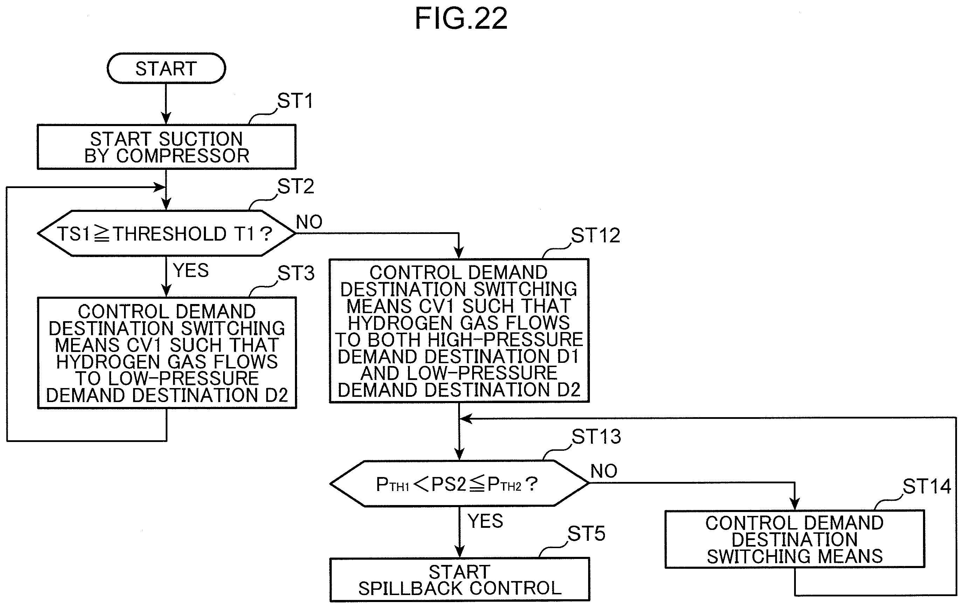

Here, the operation control executed by the controller 50 in the operation of the compressor unit 10 according to the present embodiment will be described with reference to FIG. 22. Note that in the following description, the description that overlaps with the above first embodiment will be partially omitted.

During startup of the compressor unit 10, when the controller 50 determines that a temperature TS1 of the hydrogen gas flowing through the intermediate channel 22 (discharged from a first compression stage 12) is equal to or higher than a threshold T1 (step ST2: YES), a first controller 50a controls the demand destination switching meansCV1 such that the hydrogen gas discharged from the first compression stage 12 to the intermediate channel 22 flows into the low-pressure gas exhaust path 53 (step ST1 to ST3). That is, the first switching state is configured in which the hydrogen gas is transmitted to the low-pressure demand destination D2.

When the controller 50 determines that the steady operating state (temperature TS1 < threshold T1) is achieved, the first controller 50a controls the demand destination switching means CV1 to cause the hydrogen gas to flow to both a high-pressure demand destination D1 and the low-pressure demand destination D2 (step ST12). That is, in the compressor unit 10 according to the present embodiment, in the execution of step ST12, the opening degree of the demand destination switching means CV1 including an adjusting valve 56a is adjusted to control the flow of the hydrogen gas to both the high-pressure demand destination D1 and the low-pressure demand destination D2.

In a state where the hydrogen gas is being transmitted to both the high-pressure demand destination D1 and the low-pressure demand destination D2 (third switching state), the controller 50 determines whether the pressure PS2 acquired by the exhaust path pressure sensor 49 is within a preset range (step ST13). When the controller 50 determines NO in step ST13 (P_{TH1} ≥ PS2 or PS2 > P_{TH2}), the first controller 50a controls the demand destination switching means CV1 such that the pressure PS2 falls within the preset range (step ST14).

On the other hand, when the controller 50 determines YES in step ST13 (P_{TH1} < PS2 ≤ P_{TH2}), the spillback control is executed while referring to a suction temperature TS2 acquired by an upstream temperature sensor 45 (step ST5). That is, when TS2 < T_{TH1}, a second controller 50b controls a spillback valve 18b such that a portion of the gas in a discharge channel 24 is returned to a suction channel 21. As a result, when the demand destination switching means CV1 is in the third switching state, the hydrogen gas in the suction channel 21 is heated such that the suction temperature TS2 falls within a temperature range determined in advance (T_{TH1} ≤ TS2 ≤ T_{TH2}). Note that when TS2 > T_{TH2}, the operation of returning a portion of the gas in the discharge channel 24 to the suction channel 21 is not performed. Here, in a similar manner to the above first embodiment, the temperature range determined in advance is set to a range higher than a reference temperature based on the liquefaction temperature of air and lower than 0°C. That is, the lower limit T_{TH1} and the upper limit T_{TH2} of the temperature range determined in advance are set within the range higher than the reference temperature and lower than 0°C.

The compressor unit 10 having the above-mentioned configuration can adequately protect constituent devices thereof from the wide temperature variation of the boil-off gas (hydrogen gas) from a liquid hydrogen storage tank 23. That is, the compressor unit 10 is configured to control the demand destination switching means CV1 to assume the first switching state in which the hydrogen gas flows to the low-pressure demand destination D2 even when the hydrogen gas in the piping on the liquid hydrogen storage tank 23 side has risen to a positive temperature area during startup. Therefore, the compressor unit 10 can maintain a lower compression ratio in the succeeding compression stage 14, as compared with the case where the hydrogen gas flows only to the high-pressure demand destination D1 from the discharge channel 24, thereby suppressing excessive temperature rise of the hydrogen gas due to compression and heating of the hydrogen gas in the succeeding compression stage 14. That is, the succeeding compression stage 14 can be protected. In addition, the startup of the compressor unit 10 can be carried out promptly.

Meanwhile, in the compressor unit 10, when the demand destination switching means CV1 is in the third switching state, the first controller 50a controls the demand destination switching means CV1 such that the pressure PS2 acquired by the exhaust path pressure sensor 49 falls within a preset range. In this case, the second controller 50b is configured to control the spillback valve 18b such that the suction temperature TS2 acquired by the upstream temperature sensor 45 falls within the temperature range determined in advance. Therefore, in the compressor unit 10, protection is ensured even in an environment where the hydrogen gas is at a low temperature.

If the compressor unit 10 is adopted, efficient recovery/supply of the hydrogen gas is possible.

Note that in the compressor unit 10 shown in FIG. 21, the succeeding compression stage 14 includes a compression mechanism having one stage, but may include a compression mechanism having multiple stages.

### (Seventh Embodiment)

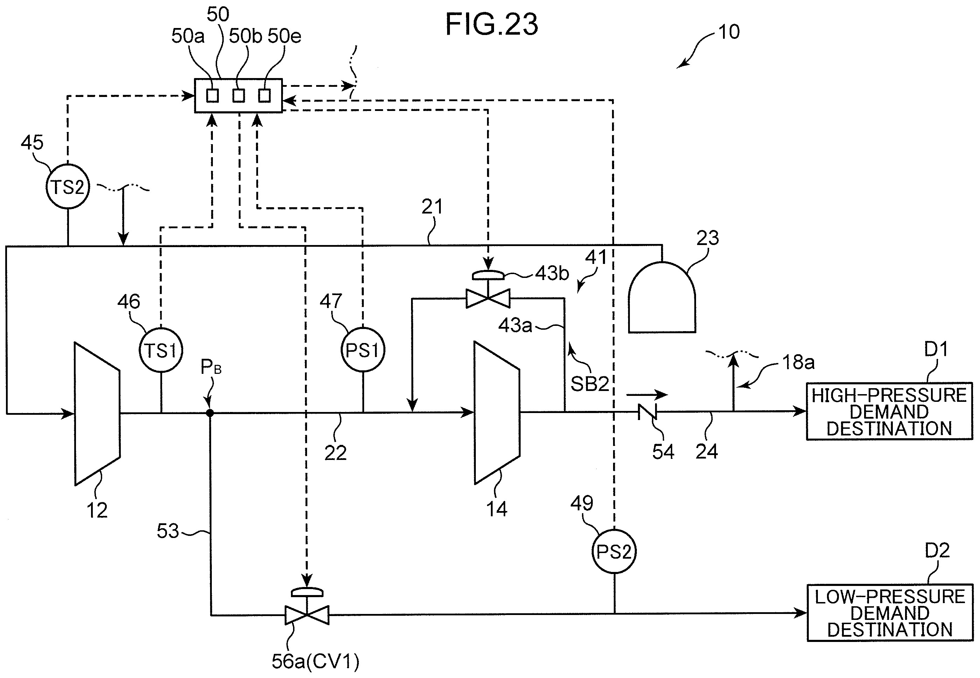

As shown in FIG. 23, a compressor unit 10 according to the seventh embodiment differs from that in the above sixth embodiment in that an adjusting means 41 is provided to adjust a processing amount of a hydrogen gas by a succeeding compression stage 14. In FIG. 23, the same component as in the sixth embodiment is denoted with the same reference sign, and the description of overlapping parts will be omitted below.

The adjusting means 41 adjusts the processing amount of the hydrogen gas by the succeeding compression stage 14. The adjusting means 41 adjusts the gas processing amount by methods other than adjusting the rotation speed of a crank mechanism 16. In the present embodiment, as one example, a spillback part (second spillback part SB2), which adjusts the processing amount of the hydrogen gas such that the gas flow rate sent from the succeeding compression stage 14 to a high-pressure demand destination D1 is adjusted, constitutes the adjusting means 41.

The second spillback part SB2 includes a second spillback channel 43a and a second spillback valve 43b disposed in the second spillback channel 43a and having an adjustable opening degree. One end of the second spillback channel 43a is connected to a region upstream of a connection part of a spillback channel 18a in a discharge channel 24, while the other end is connected to an intermediate channel 22. Therefore, a portion of the hydrogen gas discharged from the succeeding compression stage 14 is returned to the suction side of the succeeding compression stage 14 in the intermediate channel 22. The second spillback valve 43b adjusts the spillback amount in the second spillback channel 43a.

Functions of a controller 50 include a fifth controller 50e, in addition to a first controller 50a and a second controller 50b. The fifth controller 50e is a functional unit configured to control the adjusting means 41 (second spillback valve 43b) according to the change amount in pressure PS1 acquired by an intermediate pressure sensor 47.

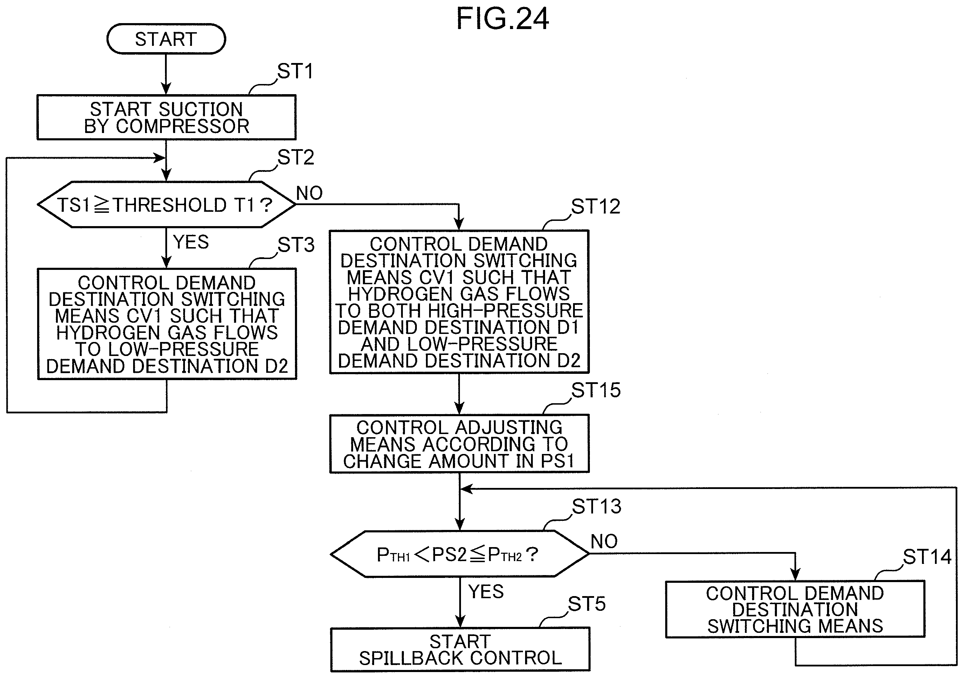

Here, the operation control executed by the controller 50 in the operation of the compressor unit 10 according to the present embodiment will be described with reference to FIG. 24. Note that in the following description, the description that overlaps with the above sixth embodiment will be omitted.

When the controller 50 determines that the steady operating state (temperature TS1 < threshold T1) is achieved, the first controller 50a controls the demand destination switching means CV1 to cause the hydrogen gas to flow to both a high-pressure demand destination D1 and the low-pressure demand destination D2 (step ST12). In the compressor unit 10 according to the present embodiment, after the first controller 50a executes step ST12, the fifth controller 50e controls the adjusting means 41 (second spillback valve 43b) according to the change amount in the pressure PS1 (step ST15). In this way, by the fifth controller 50e controlling the second spillback valve 43b according to the change amount in the pressure PS1, the processing amount of the succeeding compression stage 14 is adjusted. The present embodiment differs from the sixth embodiment in that the fifth controller 50e controls the adjusting means 41 (second spillback valve 43b).

Each control from step ST15 onward in the operation of the compressor unit 10 according to the present embodiment is the same as in the above sixth embodiment.

In the compressor unit 10 having the above configuration, when the demand destination switching means CV1 is in the third switching state, the suction pressure of the succeeding compression stage 14 can be maintained substantially constant because the fifth controller 50e includes the adjusting means 41 (second spillback valve 43b). Therefore, the compressor unit 10 can always maintain a constant pressure balance for each stage of the succeeding compression stage, thereby achieving high reliability of the compressor. That is, if the constant pressure balance in the succeeding compression stage 14 cannot be maintained, it is necessary to prepare a compressor with a large margin that has enough capacity to absorb the change, but the compressor unit 10 does not need to prepare the compressor with a large margin.

If the compressor unit 10 is adopted, efficient recovery/supply of the hydrogen gas is possible.

Note that in the compressor unit 10 shown in FIG. 23 as well, the succeeding compression stage 14 includes a compression mechanism having one stage, but may include a compression mechanism having multiple stages. In this case, the adjusting means 41 may be provided for each of the multiple stages of the compression mechanism, or a single adjusting means 41 may be provided for the multiple stages of the compression mechanism.

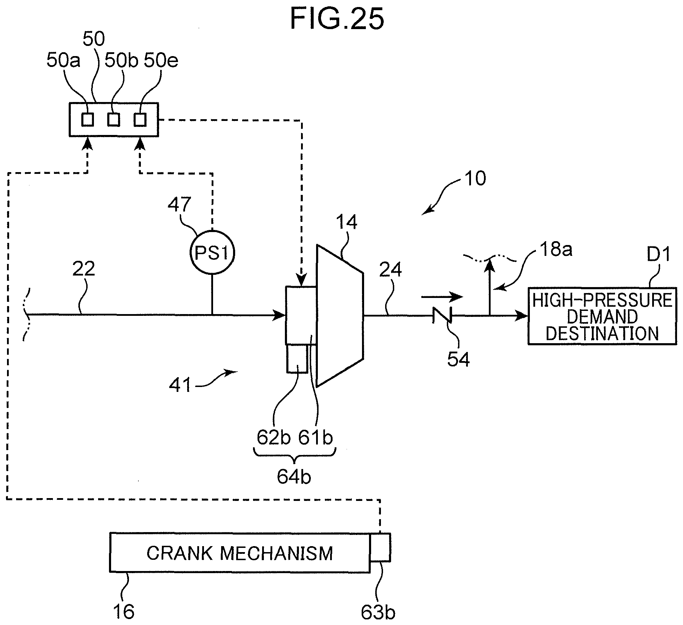

The compressor unit 10 shown in FIG. 23 includes the second spillback part SB2 as one example of the adjusting means 41, but the adjusting means 41 is not limited to this example. For example, as shown in FIG. 25, the compressor unit 10 may include a stepless capacity adjustment device 64b provided as the adjusting means 41 in the succeeding compression stage 14. The stepless capacity adjustment device 64b can have a configuration including, as described above, a suction valve unloader 61b, a drive device 62b, and a detector 63b that detects the rotation of the crank mechanism.

When the succeeding compression stage 14 adopts a configuration having the compression mechanism having multiple stages as described above, the stepless capacity adjustment device 64b may be provided in each compression mechanism or in some of the compression mechanisms as the adjustment means 41.

Furthermore, the second spillback part SB2 adopted in the compressor unit 10 shown in FIG. 23 and the capacity adjustment device 64b adopted in the compressor unit 10 shown in FIG. 25 may also be provided in parallel for the succeeding compression stage 14.

### (Variations)

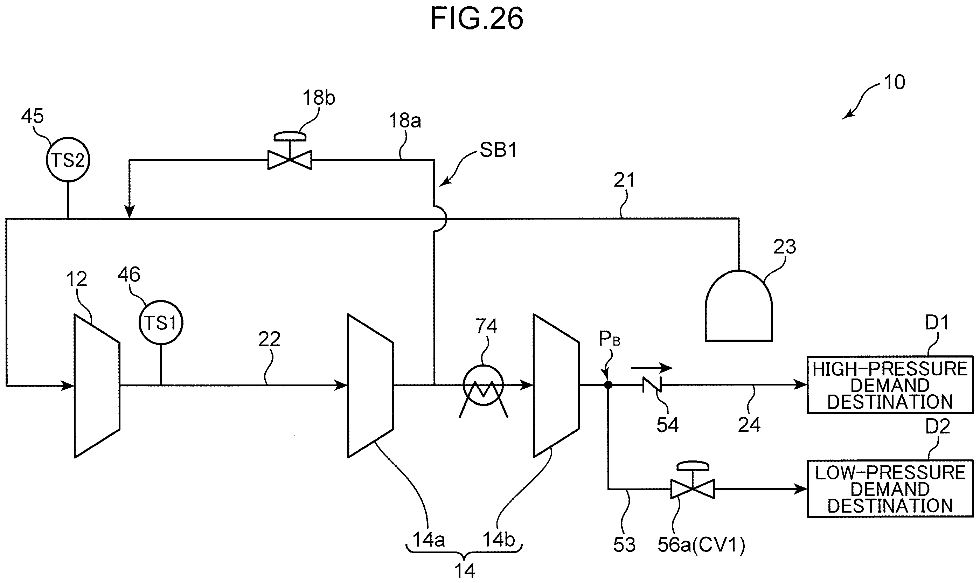

The configuration of a compressor unit 10 according to a variation of the first embodiment will be described with reference to FIG. 26. Note that in FIG. 26, a part of the configuration that is the same as in the first embodiment is omitted. Furthermore, the description of overlapping parts will be omitted below.

In the compressor unit 10 according to the present variation, a succeeding compression stage 14 may include a compression mechanism having multiple stages. Specifically, in the compressor unit 10 according to the present variation, a succeeding first compression stage 14a and a succeeding second compression stage 14b may constitute the succeeding compression stage 14. However, the succeeding compression stage 14 may include a compression mechanism having three or more stages. That is, the compressor unit 10 as a whole may include a compression mechanism having four or more stages.

In the compressor unit 10 according to the present variation, a spillback channel 18a may be connected to a place between the succeeding first compression stage 14a and the succeeding second compression stage 14b in an intermediate channel 22. This allow a portion of the hydrogen gas heated in the succeeding first compression stage 14a to be returned to a suction channel 21 via a spillback part SB1.

Furthermore, an intermediate cooler part 74 may be provided at a place between the succeeding first compression stage 14a and the succeeding second compression stage 14b in the intermediate channel 22. As a result, the hydrogen gas whose temperature is increased by the compression in the succeeding first compression stage 14a can be cooled and sent to the succeeding second compression stage 14b, thereby providing protection for the second compression stage 14b.

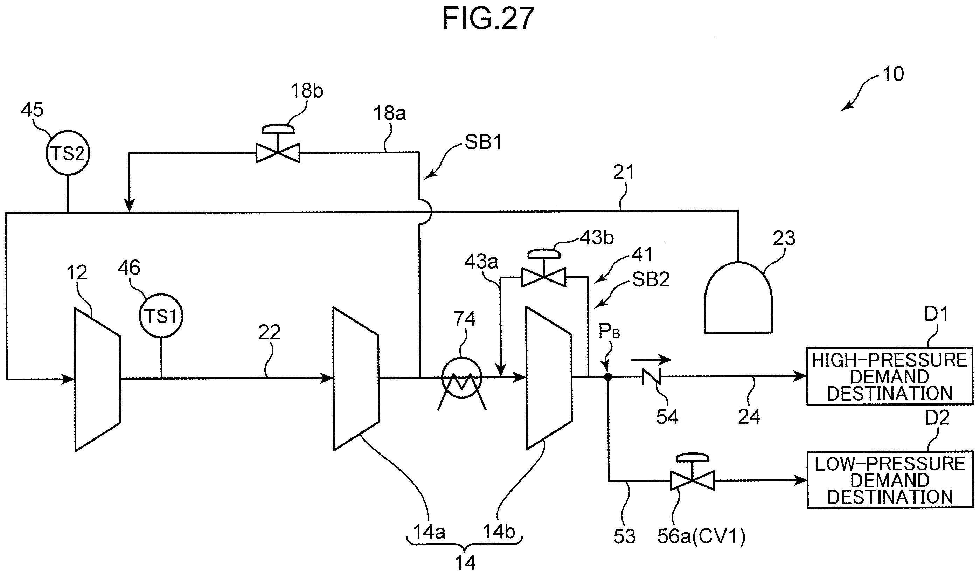

The configuration of a compressor unit 10 according to another variation of the first embodiment will be described with reference to FIG. 27. Note that in FIG. 27, a part of the configuration that is the same as in the first embodiment is omitted. Furthermore, the description of overlapping parts will be omitted below.

In the compressor unit 10 according to the present variation, in a similar manner to the variation shown in FIG. 26, a succeeding first compression stage 14a and a succeeding second compression stage 14b constitute a succeeding compression stage 14. The succeeding compression stage 14 may include a compression mechanism having three or more stages.

A spillback channel 18a is connected to a place between the succeeding first compression stage 14a and the succeeding second compression stage 14b in an intermediate channel 22. This allow a portion of the hydrogen gas heated in the succeeding first compression stage 14a to be returned to a suction channel 21 via a spillback part SB1.

The compressor unit 10 further includes a second spillback part SB2 as an adjusting means 41 on the downstream side of a branching part of the spillback channel 18a in the intermediate channel 22. In more detail, the second spillback part SB2 includes a second spillback channel 43a that returns the hydrogen gas discharged from the succeeding second compression stage 14b located downstream of the branching part of the spillback channel 18a in the intermediate channel 22 to the upstream side of the succeeding second compression stage 14b (strictly speaking, to the suction side of the succeeding second compression stage 14b), and a second spillback valve 43b that adjusts the spillback amount in the second spillback channel 43a.

When a demand destination switching means (CV1) is in the second switching state, the controller 50 controls the second spillback valve 43b such that the flow rate corresponding to the return amount of the spillback part SB1 is returned upstream of the succeeding second compression stage 14b. This allows the pressure balance of the succeeding second compression stage 14b to be kept constant.

In FIG. 27, the spillback channel 18a may be connected to a place between a first compression stage 12 and the succeeding first compression stage 14a in the intermediate channel 22. In this case, the second spillback channel 43a may be configured to return the hydrogen gas discharged from the succeeding first compression stage 14a to the upstream side of the succeeding first compression stage 14a. The second spillback channel 43a may be configured to return the hydrogen gas discharged from the succeeding second compression stage 14b to the upstream side of the succeeding first compression stage 14a.

It should be understood that the embodiments disclosed this time are illustrative in all respects and are not restrictive. The present invention is not limited to the above embodiments, and various modifications, improvements, and the like can be made without departing from the gist of the present invention.

### (Summary)

A compressor unit according to one aspect of the present invention is a reciprocating compressor unit that recovers a hydrogen gas that is a boil-off gas from a liquid hydrogen storage tank and supplies at least a portion of the hydrogen gas to a high-pressure demand destination (D1) that includes at least one of an engine, a power generation facility, or a boiler. The compressor unit according to the present aspect includes a plurality of compression stages, a crank mechanism, a spillback part (SB1), a low-pressure gas exhaust path, a demand destination switching means (CV1), a check valve, a first temperature sensor, a second temperature sensor, and a controller.

The plurality of compression stages are configured to compress the hydrogen gas suctioned from a suction channel. The crank mechanism is configured to drive the plurality of compression stages. The spillback part (SB1) includes a spillback channel and a spillback valve. The spillback channel returns the hydrogen gas discharged to a discharge channel on a discharge side of the plurality of compression stages or the hydrogen gas flowing through an intermediate channel between the plurality of compression stages to the suction channel. The spillback valve adjusts a spillback amount in the spillback channel. The low-pressure gas exhaust path branches from a branching point provided in the intermediate channel or the discharge channel and allows the hydrogen gas to be exhausted to a low-pressure demand destination (D2) configured to process the hydrogen gas at a pressure lower than a pressure of the hydrogen gas required by the high-pressure demand destination (D1). The demand destination switching means (CV1) is provided in the low-pressure gas exhaust path or at the branching point. The check valve is arranged downstream of the branching point. The first temperature sensor is arranged upstream of the branching point in the intermediate channel or the discharge channel. The second temperature sensor is arranged between a connection part of the spillback channel and a first compression stage as a foremost stage among the plurality of compression stages in the suction channel. The controller controls the demand destination switching means (CV1) and the spillback valve.

In the compressor unit according to the present aspect, the controller is configured to control the demand destination switching means (CV1) to assume a first switching state in which the hydrogen gas is caused to flow through the low-pressure gas exhaust path during startup when a temperature TS1 acquired by the first temperature sensor is equal to or higher than a predetermined first temperature threshold T1 higher than 0°C. The controller is configured to control the demand destination switching means (CV1) to assume a second switching state in which the hydrogen gas is sent to the discharge channel toward the high-pressure demand destination (D1) when the temperature TS1 acquired by the first temperature sensor becomes lower than the first temperature threshold T1. The controller is configured to refer to a suction temperature TS2 acquired by the second temperature sensor and control the spillback valve such that the suction temperature TS2 falls within a temperature range determined in advance when the demand destination switching means (CV1) is in the second switching state.

The temperature range determined in advance is set to a range higher than a reference temperature based on liquefaction temperature of air and lower than 0°C.

In the above aspect, the compressor unit can be protected both in an environment where the BOG (hydrogen gas) is at a low temperature and during startup when the BOG (hydrogen gas) is at room temperature.

Here, in the reciprocating compressor, the BOG is discharged from the compressor at pressure corresponding to pressure of the demand destination. Under such premises, the above aspect is configured such that, even when the hydrogen gas in the piping on the liquid hydrogen storage tank side rises to a positive temperature area (room temperature) during startup, the controller switches the demand destination switching means (CV1) to the first switching state such that the hydrogen gas discharged from the compression stage is transmitted to the low-pressure demand destination (D2). Therefore, by exhausting the hydrogen gas toward the low-pressure demand destination that processes the hydrogen gas at a relatively low pressure, the compression ratio in the compression stage can be kept low, preventing excessive temperature rise of the hydrogen gas due to compression and pressurization of the hydrogen gas in the compression stage. That is, the compression stage can be protected. Even when the hydrogen gas in the piping is at room temperature during startup of the unit, it is possible to quickly start the compressor unit by exhausting the hydrogen gas from the compression stage toward the low-pressure demand destination as described above.

Meanwhile, in the above aspect, when the demand destination switching means (CV1) is in the second switching state, the controller controls the spillback valve such that the suction temperature TS2 falls within the temperature range determined in advance. Therefore, the suction temperature TS2 can be kept within the temperature range determined in advance by the hydrogen gas returned by the spillback part to the suction channel. In the above aspect, since the temperature range determined in advance is set to a range higher than the reference temperature based on the liquefaction temperature of air, it is possible to avoid liquefaction of oxygen, which is an oxidizing gas, on the outer surface of the suction part of the first compression stage or around devices to which the hydrogen gas is supplied.

In the compressor unit according to the above aspect, the check valve may be provided in the discharge channel. The branching point may be provided at a position upstream of the check valve in the discharge channel.

In the above aspect, a specific configuration is adopted in which the check valve is provided in the discharge channel, and the branching point is provided at a position upstream of the check valve in the discharge channel. However, the controller switches the demand destination switching means (CV1) between the first switching state and the second switching state based on the first temperature TS1, and when the demand destination switching means (CV1) is in the second switching state, the spillback valve is controlled based on the suction temperature TS2, thereby achieving the same effect as in the above aspect.

In the above aspect, since the check valve is provided in the discharge channel, it is possible to prevent backflow of the hydrogen gas from the discharge channel to the compression stage, and to protect the compressor more appropriately.

The compressor unit according to the above aspect may further include a preheater, a third temperature sensor, and a flow rate adjusting means (FCV1). The preheater may enable heat exchange between the hydrogen gas before being suctioned into the first compression stage and the hydrogen gas after being discharged into the discharge channel. The third temperature sensor may be arranged downstream of the preheater in the discharge channel. The flow rate adjusting means (FCV1) may be configured to adjust an inflow state of the hydrogen gas into the preheater.

In the compressor unit according to the present aspect, when the demand destination switching means (CV1) is in the second switching state, the controller may be configured to control the flow rate adjusting means (FCV1) such that a temperature TS3 downstream of the preheater acquired by the third temperature sensor does not become equal to or lower than a threshold, while increasing an inflow amount of the hydrogen gas into the preheater to prioritize heating of the hydrogen gas in the suction channel by the preheater over heating by the spillback part (SB1). The controller may be configured to control the flow rate adjusting means (FCV1) and the spillback valve such that the suction temperature TS2 falls within the temperature range determined in advance when the suction temperature TS2 is lower than the temperature range determined in advance.

In the above aspect, the control is performed to prioritize the heating of the hydrogen gas in the suction channel by the preheater over the heating by the spillback part, and to compensate with the heating in the spillback part when the heating is insufficient. This allows the power loss associated with returning the compressed gas to the suction side to be minimized, as compared with the case where heating is performed only by the spillback part. Therefore, in the above aspect, it is possible to manage the suction temperature within a certain range while suppressing the decrease in processing efficiency.

In the above aspect, the third temperature sensor acquires the temperature TS3 of the hydrogen gas downstream of the preheater, and based on the temperature TS3 of the hydrogen gas acquired by the third temperature sensor, the controller controls the flow rate adjusting means (FCV1), thereby preventing excessive temperature drop of the hydrogen gas supplied to the demand destination.

The compressor unit according to the above aspect may further include a preheater, a third temperature sensor, and a flow rate adjusting means (FCV1). The preheater may enable heat exchange between the hydrogen gas before being suctioned into the first compression stage and the hydrogen gas that flows through the intermediate channel. The third temperature sensor may be arranged downstream of the preheater in the intermediate channel. The flow rate adjusting means (FCV1) may be configured to adjust an inflow state of the hydrogen gas into the preheater.

In the compressor unit according to the present aspect, when the demand destination switching means (CV1) is in the second switching state, the controller may be configured to increase an inflow amount of the hydrogen gas into the preheater to prioritize heating of the hydrogen gas in the suction channel by the preheater over heating by the spillback part (SB1), and control the flow rate adjusting means (FCV1) such that a temperature TS3 downstream of the preheater acquired by the third temperature sensor does not become equal to or lower than a threshold. The controller may be configured to control the flow rate adjusting means (FCV1) and the spillback valve such that the suction temperature TS2 falls within the temperature range determined in advance when the suction temperature TS2 is lower than the temperature range determined in advance.

The above aspect includes the preheater that can perform heat exchange between the hydrogen gas before being suctioned into the first compression stage and the hydrogen gas flowing through the intermediate channel. In the above aspect, the control is performed to prioritize the heating of the hydrogen gas in the suction channel by the preheater over the heating by the spillback part, and to compensate with the heating in the spillback part when the heating is insufficient. This allows the power loss associated with returning the compressed gas to the suction side to be minimized, as compared with the case where heating is performed only by the spillback part. Therefore, in the above aspect, it is possible to manage the suction temperature within a certain range while suppressing the decrease in processing efficiency.

In the above aspect, the third temperature sensor acquires the temperature TS3 of the hydrogen gas downstream of the preheater, and based on the temperature TS3 of the hydrogen gas acquired by the third temperature sensor, the controller controls the flow rate adjusting means (FCV1), thereby preventing excessive temperature drop of the hydrogen gas supplied to the demand destination.

In the compressor unit according to the above aspect, the check valve may be provided in the discharge channel, and the branching point may be provided upstream of the check valve in the discharge channel. The compressor unit according to the present aspect may further include an other low-pressure gas exhaust path and a second demand destination switching means (CV2). The other low-pressure gas exhaust path may be a channel that branches from an other branching point provided in the intermediate channel and allows the hydrogen gas to be exhausted to an other low-pressure demand destination (D3) configured to process the hydrogen gas at a pressure lower than a pressure of the hydrogen gas required by the high-pressure demand destination (D1). The second demand destination switching means (CV2) may be provided in the other low-pressure gas exhaust path or at the other branching point.

In the compressor unit according to the present aspect, the controller may be configured to control the second demand destination switching means (CV2) to cause the hydrogen gas in the intermediate channel to flow into the other low-pressure gas exhaust path when the demand destination switching means (CV1) is in the first switching state. The controller may be configured to control the second demand destination switching means (CV2) to send the hydrogen gas to the discharge channel toward the high-pressure demand destination (D1) when the demand destination switching means (CV1) is in the second switching state.

In the above aspect, the controller is configured to control two demand destination switching means (CV1) and (CV2), allowing switching between the first switching state and the second switching state, enables the hydrogen gas to be exhausted not only to the low-pressure gas exhaust path but also to the other low-pressure gas exhaust path, thereby allowing reduction in the pressure of the hydrogen gas in the intermediate channel, as compared with the case where no other low-pressure gas exhaust path is provided. Therefore, in the above aspect, the compressor unit can lower the suction pressure of the compression stage disposed downstream of the intermediate channel and reduce the power during startup.

In the compressor unit according to the above aspect, the check valve may be provided in the discharge channel, and the branching point may be provided at a position upstream of the check valve in the discharge channel. The compressor unit according to the present aspect may further include an other low-pressure gas exhaust path, a second demand destination switching means (CV2), and an adjusting means. The other low-pressure gas exhaust path may be a channel that branches from an other branching point in the intermediate channel and allows the hydrogen gas to be exhausted to an other low-pressure demand destination (D3) configured to process the hydrogen gas at a pressure lower than the pressure of the hydrogen gas required by the high-pressure demand destination (D1). The second demand destination switching means (CV2) may be provided in the other low-pressure gas exhaust path or at the other branching point. The adjusting means may adjust a processing amount of the hydrogen gas by a succeeding compression stage excluding the first compression stage among the plurality of compression stages.

In the compressor unit according to the present aspect, the controller may be configured to: when the demand destination switching means (CV1) is in the second switching state, control the adjusting means such that the processing amount of the succeeding compression stage is adjusted while controlling the second demand destination switching means (CV2) such that the hydrogen gas is exhausted into the other low-pressure gas exhaust path according to a fluctuation of a demand amount of the other low-pressure demand destination (D3) or a demand amount of the high-pressure demand destination (D1).

In the above aspect, when the required amount (demand amount) of the hydrogen gas in the high-pressure demand destination is reduced, it is possible to maintain the pressure of the liquid hydrogen storage tank at a constant level by exhausting the hydrogen gas to the other low-pressure demand destination and balancing the amount of boil-off gas generated from the liquid hydrogen storage tank and the amount of the hydrogen gas transmitted from the compressor unit.

Furthermore, since the above aspect includes the adjusting means, the suction pressure of the succeeding compression stage can be maintained substantially constant. Therefore, in the above aspect, constant pressure balance for each stage of the succeeding compression stage can be always maintained, thereby achieving high reliability of the compressor. That is, if constant pressure balance in the succeeding compression stage cannot be maintained, it is necessary to prepare a compressor with a large margin that has enough capacity to absorb the change, but the above aspect does not need to prepare the compressor with a large margin.

In the compressor unit according to the above aspect, the adjusting means may include a second spillback part (SB2). In a case where the spillback part (SB1) returns the hydrogen gas discharged into the discharge channel to the suction channel, the second spillback part (SB2) may include a second spillback channel that returns the hydrogen gas to a suction side of the succeeding compression stage from upstream of the branching part on the discharge channel where the spillback channel branches, and a spillback valve that adjusts the spillback amount in the second spillback channel.

In the compressor unit according to the present aspect, the controller may be configured to control the second spillback valve such that when the demand destination switching means (CV1) is in the second switching state, a flow rate corresponding to the fluctuation of the demand amount of the other low-pressure demand destination (D3) or the demand amount of the high-pressure demand destination (D1) is returned to the suction side of the succeeding compression stage.

Since the above aspect includes the second spillback part, even when the demand amount of the high-pressure demand destination (D1) decreases, the second spillback part returns the compressed hydrogen gas to the suction side of the succeeding compression stage, thereby maintaining the suction pressure of the succeeding compression stage substantially constant. Therefore, in the above aspect, constant pressure balance for each stage of the succeeding compression stage can be always maintained, thereby achieving high reliability of the compressor.

In the compressor unit according to the above aspect, the adjusting means may include a second spillback part (SB2). In a case where the spillback part (SB1) returns the hydrogen gas flowing through the intermediate channel to the suction channel, the second spillback part (SB2) may include a second spillback channel that returns the hydrogen gas discharged from each of the compression stages located downstream of the branching part on the intermediate channel where the spillback channel branches to an upstream side of the compression stage, and a second spillback valve that adjusts the spillback amount in the second spillback channel.

In the compressor unit according to the present aspect, the controller may be configured to control the second spillback valve such that when the demand destination switching means (CV1) is in the second switching state, a flow rate corresponding to a return amount of the spillback part (SB1) is returned upstream of the compression stage.

Since the above aspect includes the second spillback part, by the spillback part returning the hydrogen gas to the suction channel, even when the processing amount of the compression stage decreases, the second spillback part returns the compressed hydrogen gas to the upstream side of the compression stage, thereby maintaining the suction pressure of the compression stage substantially constant. Therefore, in the above aspect, high reliability of the compressor can be obtained.

In the compressor unit according to the above aspect, the adjusting means may include an on-off type suction valve unloader. The on-off type suction valve unloader may be mounted on a cylinder part of the succeeding compression stage.

In the compressor unit according to the present aspect, the controller may be configured to control the suction valve unloader such that a flow rate corresponding to the fluctuation of the demand amount of the other low-pressure demand destination (D3) or the demand amount of the high-pressure demand destination (D1) is returned to a suction side of the succeeding compression stage when the demand destination switching means (CV1) is in the second switching state.

Since the above aspect includes the second spillback part, even when the demand amount of the high-pressure demand destination (D1) decreases, the second spillback part returns the compressed hydrogen gas to the suction side of the succeeding compression stage, thereby maintaining the suction pressure of the succeeding compression stage substantially constant. Therefore, in the above aspect, constant pressure balance for each stage of the succeeding compression stage can be always maintained, thereby achieving high reliability of the compressor.

In the compressor unit according to the above aspect, the adjusting means may include a stepless capacity adjustment device. The stepless capacity adjustment device may include a suction valve unloader and a drive device. The suction valve unloader may be mounted on a cylinder part of the succeeding compression stage. The drive device may be a hydraulic or electric drive device that opens and closes the suction valve unloader.

In the compressor unit according to the above aspect, the controller may be configured to control timing when the suction valve unloader operates in conjunction with a rotational motion of a crankshaft such that when the demand destination switching means (CV1) is in the second switching state, the hydrogen gas that is suctioned from inside of the cylinder part to a suction side is returned according to a flow rate corresponding to the fluctuation of the demand amount of the other low-pressure demand destination (D3) or the demand amount of the high-pressure demand destination (D1), whereby the processing amount of the succeeding compression stage may be adjusted.

Since the above aspect adopts a configuration including the other low-pressure gas exhaust path in which the adjusting means includes the suction valve unloader, when the demand destination switching means (CV1) is in the second switching state, the controller can return a portion of the hydrogen gas inside the cylinder to the suction side by controlling the capacity adjustment device. Therefore, in the above aspect, the processing amount of the hydrogen gas in the succeeding compression stage can be reduced, and the power can be further reduced.

A compressor unit according to another aspect of the present invention is a reciprocating compressor unit that recovers a hydrogen gas that is a boil-off gas from a liquid hydrogen storage tank and supplies at least a portion of the hydrogen gas to a high-pressure demand destination (D1) that includes at least one of an engine, a power generation facility, or a boiler. The compressor unit according to the present aspect includes a plurality of compression stages, a crank mechanism, a spillback part (SB1), a low-pressure gas exhaust path, a demand destination switching means (CV1), a check valve, a first temperature sensor, a second temperature sensor, a pressure sensor, and a controller.

The plurality of compression stages are configured to compress the hydrogen gas suctioned from a suction channel. The crank mechanism is configured to drive the plurality of compression stages. The spillback part (SB1) includes a spillback channel and a spillback valve. The spillback channel returns the hydrogen gas discharged to a discharge channel on a discharge side of the plurality of compression stages or the hydrogen gas flowing through an intermediate channel between the plurality of compression stages to the suction channel. The spillback valve adjusts a spillback amount in the spillback channel. The low-pressure gas exhaust path branches from a branching point provided in the intermediate channel and allows the hydrogen gas to be exhausted to a low-pressure demand destination (D2) configured to process the hydrogen gas at a pressure lower than a pressure of the hydrogen gas required by the high-pressure demand destination (D1). The demand destination switching means (CV1) is provided in the low-pressure gas exhaust path or at the branching point. The check valve is arranged downstream of the branching point in the intermediate channel. The first temperature sensor is arranged upstream of the branching point in the intermediate channel. The second temperature sensor is arranged between a connection part of the spillback channel and a first compression stage as a foremost stage among the plurality of compression stages in the suction channel. The pressure sensor is provided in the low-pressure gas exhaust path. The controller is configured to control the demand destination switching means (CV1) and the spillback valve.

In the compressor unit according to the present aspect, the controller may be configured to control the demand destination switching means (CV1) to assume a first switching state in which the hydrogen gas discharged from the first compression stage is caused to flow through the low-pressure gas exhaust path during startup when a temperature TS1 acquired by the first temperature sensor is equal to or higher than a predetermined first temperature threshold T1 higher than 0°C. The controller may be configured to control the demand destination switching means (CV1) to assume a third switching state in which the hydrogen gas is caused to flow through both the low-pressure gas exhaust path and downstream of the branching point in the intermediate channel when the temperature TS1 acquired by the first temperature sensor becomes lower than the first temperature threshold T1. The controller may be configured to control the demand destination switching means (CV1) such that pressure PS2 acquired by the pressure sensor falls within a preset range, refer to a suction temperature TS2 acquired by the second temperature sensor, and control the spillback valve such that the suction temperature TS2 falls within a temperature range determined in advance when the demand destination switching means (CV1) is in the third switching state.

The temperature range determined in advance is set to a range higher than a reference temperature based on liquefaction temperature of air and lower than 0°C.

In the above aspect, the controller is configured to control the demand destination switching means (CV1) such that, even when the hydrogen gas in the piping on the liquid hydrogen storage tank side rises to a positive temperature area (room temperature) during startup, the first switching state is assumed in which the hydrogen gas is transmitted to both downstream of the branching point in the intermediate channel and the low-pressure demand destination (D2) from the branching point. Therefore, in the above aspect, it is possible to maintain a lower compression ratio in the compression stage, as compared with the case where the hydrogen gas is transmitted only to the high-pressure demand destination (D1) from the discharge channel, and to prevent excessive temperature rise of the hydrogen gas due to compression and heating of the hydrogen gas in the compression stage. That is, the compression stage can be protected. Even when the hydrogen gas in the piping is at room temperature during startup of the unit, it is possible to quickly start the compressor unit by transmitting the hydrogen gas toward both the high-pressure demand destination (D1) and the low-pressure demand destination (D2) as described above.

Meanwhile, the above aspect has a configuration in which, when the demand destination switching means (CV1) is in the third switching state, the controller controls the demand destination switching means (CV1) such that the acquired pressure PS2 of the hydrogen gas falls within a preset range, and the controller controls the spillback valve such that the suction temperature TS2 falls within the temperature range determined in advance, thereby protecting the compressor unit in an environment where the hydrogen gas is at a low temperature.

The compressor unit according to the above aspect may further include an adjusting means and a second pressure sensor. The adjusting means may adjust a processing amount of the hydrogen gas by a succeeding compression stage excluding the first compression stage among the plurality of compression stages. The second pressure sensor may be provided between the first compression stage and the succeeding compression stage in the intermediate channel.

In the compressor unit according to the present aspect, the controller may be configured to control the adjusting means such that the processing amount of the succeeding compression stage is adjusted according to a change amount in pressure PS1 in the intermediate channel acquired by the second pressure sensor when the demand destination switching means (CV1) is in the third switching state.

In the above aspect, the controller is configured to control the adjusting means to reduce the processing amount of the hydrogen gas in the succeeding compression stage when the demand destination switching means (CV1) is in the third switching state, thereby reducing the power of the succeeding compression stage.

As described above, the compressor unit according to each of the above aspects can adequately protect constituent devices thereof from the wide temperature variation of the boil-off gas of the liquefied hydrogen.

## Claims

1. A reciprocating compressor unit(10) that recovers a hydrogen gas that is a boil-off gas from a liquid hydrogen storage tank(23) and supplies at least a portion of the hydrogen gas to a high-pressure demand destination (D1) that includes at least one of an engine, a power generation facility, or a boiler, the compressor unit(10) comprising:
a plurality of compression stages(12,14) configured to compress the hydrogen gas suctioned from a suction channel(21);
a crank mechanism(16) configured to drive the plurality of compression stages(12,14);
a spillback part (SB1) including a spillback channel(18a) that returns the hydrogen gas discharged to a discharge channel(24) on a discharge side of the plurality of compression stages(12,14) or the hydrogen gas flowing through an intermediate channel(22) between the plurality of compression stages(12,14) to the suction channel(21), and a spillback valve(18b) that adjusts a spillback amount in the spillback channel(18a);
a low-pressure gas exhaust path(53) that branches from a branching point(P_{B}) provided in the intermediate channel(22) or the discharge channel(24) and allows the hydrogen gas to be exhausted to a low-pressure demand destination (D2) configured to process the hydrogen gas at a pressure lower than pressure of the hydrogen gas required by the high-pressure demand destination (D1);
a demand destination switching means (CV1) provided in the low-pressure gas exhaust path(53) or at the branching point(P_{B});
a check valve(54) arranged downstream of the branching point(P_{B});
a first temperature sensor(46) arranged upstream of the branching point(P_{B}) in the intermediate channel(22) or the discharge channel(24);
a second temperature sensor(45) arranged between a connection part of the spillback channel(18a) and a first compression stage(12) as a foremost stage among the plurality of compression stages(12,14) in the suction channel(21); and
a controller(50) that controls the demand destination switching means (CV1) and the spillback valve(18b),
wherein the controller(50) is configured to:
control the demand destination switching means (CV1) to assume a first switching state in which the hydrogen gas is caused to flow through the low-pressure gas exhaust path(53), when the compressor unit starts up and a temperature TS1 acquired by the first temperature sensor(46) is equal to or higher than a predetermined first temperature threshold T1 higher than 0°C;
control the demand destination switching means (CV1) to assume a second switching state in which the hydrogen gas is sent to the discharge channel(24) toward the high-pressure demand destination (D1) when the temperature TS1 acquired by the first temperature sensor(46) becomes lower than the first temperature threshold T1; and
refer to a suction temperature TS2 acquired by the second temperature sensor(45) and control the spillback valve(18b) such that the suction temperature TS2 falls within a temperature range determined in advance when the demand destination switching means (CV1) is in the second switching state, and
the temperature range determined in advance is set to a range higher than a reference temperature based on liquefaction temperature of air and lower than 0°C.

2. The compressor unit(10) according to claim 1, wherein
the check valve(54) is provided in the discharge channel(24), and
the branching point(P_{B}) is provided at a position upstream of the check valve(54) in the discharge channel(24).

3. The compressor unit(10) according to claim 2, further comprising:
a preheater(71) that enables heat exchange between the hydrogen gas before being suctioned into the first compression stage(12) and the hydrogen gas after being discharged into the discharge channel(24);
a third temperature sensor(48) arranged downstream of the preheater(71) in the discharge channel(24); and
a flow rate adjusting means (FCV1) that allows adjustment of an inflow state of the hydrogen gas into the preheater(71),
wherein the controller(50) is configured to:
when the demand destination switching means (CV1) is in the second switching state,
control the flow rate adjusting means (FCV1) such that a temperature TS3 downstream of the preheater(71) acquired by the third temperature sensor(48) does not become equal to or lower than a threshold, while increasing an inflow amount of the hydrogen gas into the preheater(71) to prioritize heating of the hydrogen gas in the suction channel(21) by the preheater(71) over heating by the spillback part (SB1); and
control the flow rate adjusting means (FCV1) and the spillback valve(18b) such that the suction temperature TS2 falls within the temperature range determined in advance when the suction temperature TS2 is lower than the temperature range determined in advance.

4. The compressor unit(10) according to claim 2, further comprising:
a preheater(71) that enables heat exchange between the hydrogen gas before being suctioned into the first compression stage(12) and the hydrogen gas that flows through the intermediate channel(22);
a third temperature sensor(48) arranged downstream of the preheater(71) in the intermediate channel(22); and
a flow rate adjusting means (FCV1) that allows adjustment of an inflow state of the hydrogen gas into the preheater(71),
wherein the controller(50) is configured to:
when the demand destination switching means (CV1) is in the second switching state,
control the flow rate adjusting means (FCV1) to increase an inflow amount of the hydrogen gas into the preheater(71) to prioritize heating of the hydrogen gas in the suction channel(21) by the preheater(71) over heating by the spillback part (SB1) such that a temperature TS3 downstream of the preheater(71) acquired by the third temperature sensor(48) does not become equal to or lower than a threshold; and
control the flow rate adjusting means (FCV1) and the spillback valve(18b) such that the suction temperature TS2 falls within the temperature range determined in advance when the suction temperature TS2 is lower than the temperature range determined in advance.

5. The compressor unit(10) according to claim 1, wherein
the check valve(54) is provided in the discharge channel(24), and
the branching point(P_{B}) is provided upstream of the check valve(54) in the discharge channel(24),
the compressor unit(10) further includes:
an other low-pressure gas exhaust path(83) that branches from an other branching point(P_{B}2) provided in the intermediate channel(22) and allows the hydrogen gas to be exhausted to an other low-pressure demand destination (D3) configured to process the hydrogen gas at a pressure lower than a pressure of the hydrogen gas required by the high-pressure demand destination (D1); and
a second demand destination switching means (CV2) provided in the other low-pressure gas exhaust path(83) or at the other branching point(P_{B}2),
the controller(50) is configured to:
control the second demand destination switching means (CV2) to cause the hydrogen gas in the intermediate channel(22) to flow into the other low-pressure gas exhaust path(83) when the demand destination switching means (CV1) is in the first switching state; and
control the second demand destination switching means (CV2) to send the hydrogen gas to the discharge channel toward the high-pressure demand destination (D1) when the demand destination switching means (CV1) is in the second switching state.

6. The compressor unit(10) according to claim 1, wherein
the check valve(54) is provided in the discharge channel(24), and
the branching point(P_{B}) is provided at a position upstream of the check valve(54) in the discharge channel(24),
the compressor unit(10) further includes:
an other low-pressure gas exhaust path(83) that branches from an other branching point(P_{B}2) provided in the intermediate channel(22) and allows the hydrogen gas to be exhausted to an other low-pressure demand destination (D3) configured to process the hydrogen gas at a pressure lower than pressure of the hydrogen gas required by the high-pressure demand destination (D1);
a second demand destination switching means (CV2) provided in the other low-pressure gas exhaust path(83) or at the other branching point(P_{B}2); and
an adjusting means(41) configured to adjust a processing amount of the hydrogen gas by a succeeding compression stage(14) excluding the first compression stage among the plurality of compression stages(12,14),
the controller(50) is configured to:
when the demand destination switching means (CV1) is in the second switching state,
control the adjusting means(41) such that the processing amount of the succeeding compression stage(14) is adjusted while controlling the second demand destination switching means (CV2) such that the hydrogen gas is exhausted into the other low-pressure gas exhaust path(83) according to a fluctuation of a demand amount of the other low-pressure demand destination (D3) or a demand amount of the high-pressure demand destination (D1).

7. The compressor unit(10) according to claim 6, wherein
in a case where the spillback part (SB1) returns the hydrogen gas discharged into the discharge channel(24) to the suction channel(21),
the adjusting means(41) includes a second spillback part (SB2) that includes a second spillback channel(43a) that returns the hydrogen gas to a suction side of the succeeding compression stage(14) from upstream of the branching part on the discharge channel(24) where the spillback channel(18a) branches, and a second spillback valve(43b) that adjusts the spillback amount in the second spillback channel(43a), and
the controller(10) is configured to:
control the second spillback valve(43b) such that when the demand destination switching means (CV1) is in the second switching state, a flow rate corresponding to the fluctuation of the demand amount of the other low-pressure demand destination (D3) or the demand amount of the high-pressure demand destination (D1) is returned to the suction side of the succeeding compression stage(14).

8. The compressor unit(10) according to claim 6, wherein
in a case where the spillback part (SB1) returns the hydrogen gas flowing through the intermediate channel(22) to the suction channel(21),
the adjusting means(41) includes a second spillback part (SB2) that includes a second spillback channel(43a) that returns the hydrogen gas discharged from each of the compression stages located downstream of the branching part on the intermediate channel(22) where the spillback channel(18a) branches to an upstream side of the compression stage(14b), and a second spillback valve(43b) that adjusts the spillback amount in the second spillback channel(43a), and
the controller(50) is configured to control the second spillback valve(43b) such that when the demand destination switching means (CV1) is in the second switching state, a flow rate corresponding to a return amount of the spillback part (SB1) is returned upstream of the compression stage(14b).

9. The compressor unit(10) according to claim 6, wherein
the adjusting means(41) includes an on-off type suction valve unloader(61) mounted on a cylinder part of the succeeding compression stage(14), and
the controller is configured to control the suction valve unloader(61) such that a flow rate corresponding to the fluctuation of the demand amount of the other low-pressure demand destination (D3) or the demand amount of the high-pressure demand destination (D1) is returned to a suction side of the succeeding compression stage(14) when the demand destination switching means (CV1) is in the second switching state.

10. The compressor unit(10) according to claim 6, wherein
the adjusting means(41) includes a stepless capacity adjustment device(64) including:
a suction valve unloader(61b) mounted on a cylinder part of the succeeding compression stage(14); and
a hydraulic or electric drive device(62b) that opens and closes the suction valve unloader(61b), and
the controller(50) is configured to control timing when the suction valve unloader(61b) operates in conjunction with a rotational motion of a crankshaft such that when the demand destination switching means (CV1) is in the second switching state, the hydrogen gas that is suctioned from inside of the cylinder part to a suction side is returned according to a flow rate corresponding to the fluctuation of the demand amount of the other low-pressure demand destination (D3) or the demand amount of the high-pressure demand destination (D1), whereby the processing amount of the succeeding compression stage(14) being adjusted.

11. A reciprocating compressor unit(10) that recovers a hydrogen gas that is a boil-off gas from a liquid hydrogen storage tank(23) and supplies at least a portion of the hydrogen gas to a high-pressure demand destination (D1) that includes at least one of an engine, a power generation facility, or a boiler, the compressor unit(10) comprising:
a plurality of compression stages(12,14) configured to compress the hydrogen gas suctioned from a suction channel(24);
a crank mechanism(16) configured to drive the plurality of compression stages(12,14);
a spillback part (SB1) including a spillback channel(18a) that returns the hydrogen gas discharged to a discharge channel(24) on a discharge side of the plurality of compression stages(12,14) or the hydrogen gas flowing through an intermediate channel(22) between the plurality of compression stages(12,14) to the suction channel(21), and a spillback valve that adjusts a spillback amount in the spillback channel(18a);
a low-pressure gas exhaust path(53) that branches from a branching point(P_{B}) provided in the intermediate channel(22) and allows the hydrogen gas to be exhausted to a low-pressure demand destination (D2) configured to process the hydrogen gas at a pressure lower than pressure of the hydrogen gas required by the high-pressure demand destination (D1);
a demand destination switching means (CV1) provided in the low-pressure gas exhaust path(53) or at the branching point(P_{B});
a check valve(54) provided downstream of the branching point(P_{B}) in the intermediate channel(22);
a first temperature sensor(46) arranged upstream of the branching point(P_{B}) in the intermediate channel(22);
a second temperature sensor(45) arranged between a connection part of the spillback channel(18a) and a first compression stage(12) as a foremost stage among the plurality of compression stages(12, 14) in the suction channel(21);
a pressure sensor(49) provided in the low-pressure gas exhaust path(53); and
a controller(50) that controls the demand destination switching means (CV1) and the spillback valve(18b),
wherein the controller(50) is configured to:
control the demand destination switching means (CV1) to assume a first switching state in which the hydrogen gas discharged from the first compression stage (12) is caused to flow through the low-pressure gas exhaust path(53), when the compressor unit starts up and a temperature TS1 acquired by the first temperature sensor(46) is equal to or higher than a predetermined first temperature threshold T1 higher than 0°C;
control the demand destination switching means (CV1) to assume a third switching state in which the hydrogen gas is caused to flow through both the low-pressure gas exhaust path and downstream of the branching point(P_{B}) in the intermediate channel(22) when the temperature TS1 acquired by the first temperature sensor(46) becomes lower than the first temperature threshold T1; and
control the demand destination switching means (CV1) such that pressure PS2 acquired by the pressure sensor(49) falls within a preset range, refer to a suction temperature TS2 acquired by the second temperature sensor(45), and control the spillback valve(18b) such that the suction temperature TS2 falls within a temperature range determined in advance when the demand destination switching means (CV1) is in the third switching state, and
the temperature range determined in advance is set to a range higher than a reference temperature based on liquefaction temperature of air and lower than 0°C.

12. The compressor unit(10) according to claim 11, further comprising:
an adjusting means(41) configured to adjust a processing amount of the hydrogen gas by a succeeding compression stage(14) excluding the first compression stage(12) among the plurality of compression stages(12,14); and
a second pressure sensor(47) provided between the first compression stage(12) and the succeeding compression stage814) in the intermediate channel(22),
wherein the controller(50) is configured to control the adjusting means(41) such that the processing amount of the succeeding compression stage(14) is adjusted according to a change amount in pressure PS1 in the intermediate channel(22) acquired by the second pressure sensor(47) when the demand destination switching means (CV1) is in the third switching state.

## Patentansprüche

1. Kolbenkompressoreinheit (10), die ein Wasserstoffgas, das ein Boiloff-Gas aus einem Flüssigwasserstoffspeichertank (23) ist, zurückgewinnt und zumindest einen Teil des Wasserstoffgases an ein Hochdruck-Bedarfsziel (D1) liefert, das mindestens eines von einem Motor, einer Energieerzeugungsanlage oder einem Kessel aufweist, wobei die Kompressoreinheit (10) umfasst:
eine Vielzahl von Kompressionsstufen (12, 14), die dazu eingerichtet sind, das aus einem Ansaugkanal (21) angesaugte Wasserstoffgas zu verdichten;
einen Kurbelmechanismus (16), der dazu eingerichtet ist, die Vielzahl von Kompressionsstufen (12, 14) anzutreiben;
ein Rücklaufteil (SB1) mit einem Rücklaufkanal (18a), der das in einen Auslasskanal (24) auf einer Auslassseite der Vielzahl von Kompressionsstufen (12, 14) abgegebene Wasserstoffgas oder das durch einen Zwischenkanal (22) zwischen der Vielzahl von Kompressionsstufen (12, 14) fließende Wasserstoffgas zum Ansaugkanal (21) zurückführt, und ein Rücklaufventil (18b), das eine Rücklaufmenge in dem Rücklaufkanal (18a) einstellt;
einen Niederdruck-Gasaustrittspfad (53), der von einem Verzweigungspunkt (P_{B}) abzweigt, der in dem Zwischenkanal (22) oder dem Auslasskanal (24) vorgesehen ist, und es ermöglicht, das Wasserstoffgas zu einem Niederdruck-Bedarfsziel (D2) abzuleiten, das dazu eingerichtet ist, das Wasserstoffgas bei einem Druck zu verarbeiten, der niedriger ist als der vom Hochdruck-Bedarfsziel (D1) benötigte Druck des Wasserstoffgases;
eine Bedarfsziel-Umschalteinrichtung (CV1), die in dem Niederdruck-Gasaustrittspfad (53) oder an dem Verzweigungspunkt (P_{B}) vorgesehen ist;
ein Rückschlagventil (54), das stromabwärts des Verzweigungspunkts (P_{B}) angeordnet ist;
einen erster Temperatursensor (46), der stromaufwärts des Verzweigungspunkts (P_{B}) in dem Zwischenkanal (22) oder dem Auslasskanal (24) angeordnet ist;
einen zweiten Temperatursensor (45), der zwischen einem Anschlussteil des Rücklaufkanals (18a) und einer ersten Kompressionsstufe (12) als eine vorderste Stufe unter der Vielzahl von Kompressionsstufen (12, 14) in dem Ansaugkanal (21) angeordnet ist; und
eine Steuereinheit (50), die die Bedarfsziel-Umschalteinrichtung (CV1) und das Rücklaufventil (18b) steuert,
wobei die Steuereinheit (50) eingerichtet ist, um:
die Bedarfsziel-Umschalteinrichtung (CV1) zu steuern, so dass sie einen ersten Schaltzustand einnimmt, in dem das Wasserstoffgas veranlasst wird durch den Niederdruck-Gasaustrittspfad (53) zu strömen, wenn die Kompressoreinheit anläuft und eine von dem ersten Temperatursensor (46) erfasste Temperatur TS1 gleich oder höher als ein vorbestimmter erster Temperaturschwellenwert T1 ist, der höher als 0 °C ist;
die Bedarfsziel-Umschalteinrichtung (CV1) zu steuern, so dass sie einen zweiten Schaltzustand einnimmt, in dem das Wasserstoffgas zu dem Auslasskanal (24) in Richtung des Hochdruck-Bedarfsziels (D1) geleitet wird, wenn die von dem ersten Temperatursensor (46) erfasste Temperatur TS1 unter den ersten Temperaturschwellenwert T1 fällt; und
auf eine von dem zweiten Temperatursensor (45) erfasste Ansaugtemperatur TS2 Bezug zu nehmen und das Rücklaufventil (18b) so zu steuern, dass die Ansaugtemperatur TS2 in einen vorab festgelegten Temperaturbereich fällt, wenn sich die Bedarfsziel-Umschalteinrichtung (CV1) in dem zweiten Schaltzustand befindet, und
der vorab festgelegte Temperaturbereich auf einen Bereich eingestellt ist, der höher als eine auf der Verflüssigungstemperatur von Luft basierende Referenztemperatur und niedriger als 0 °C ist.

2. Kompressoreinheit (10) nach Anspruch 1, wobei
das Rückschlagventil (54) in dem Auslasskanal (24) vorgesehen ist, und
der Verzweigungspunkt (P_{B}) an einer Stelle stromaufwärts des Rückschlagventils (54) in dem Auslasskanal (24) vorgesehen ist.

3. Kompressoreinheit (10) nach Anspruch 2, ferner umfassend:
einen Vorwärmer (71), der einen Wärmeaustausch zwischen dem Wasserstoffgas vor dessen Ansaugung in die erste Kompressionsstufe (12) und dem Wasserstoffgas nach dessen Abgabe in den Auslasskanal (24) ermöglicht;
einen dritter Temperatursensor (48), der stromabwärts des Vorwärmers (71) in dem Auslasskanal (24) angeordnet ist; und
eine Durchflussmengen-Einstelleinrichtung (FCV1), die eine Einstellung eines Einströmzustands des Wasserstoffgases in den Vorwärmer (71) ermöglicht,
wobei die Steuereinheit (50) eingerichtet ist, um:
wenn sich die Bedarfsziel-Umschalteinrichtung (CV1) in dem zweiten Schaltzustand befindet,
die Durchflussmengen-Einstelleinrichtung (FCV1) zu steuern, so dass eine von dem dritten Temperatursensor (48) erfasste Temperatur TS3 stromabwärts des Vorwärmers (71) nicht gleich oder niedriger als ein Schwellenwert wird, während eine Einströmmenge des Wasserstoffgases in den Vorwärmer (71) erhöht wird, um die Erwärmung des Wasserstoffgases in dem Ansaugkanal (21) durch den Vorwärmer (71) gegenüber der Erwärmung durch das Rücklaufteil (SB1) zu priorisieren; und
die Durchflussmengen-Einstelleinrichtung (FCV1) und das Rücklaufventil (18b) zu steuern, so dass die Ansaugtemperatur TS2 in den vorab festgelegten Temperaturbereich fällt, wenn die Ansaugtemperatur TS2 unterhalb des vorab festgelegten Temperaturbereichs liegt.

4. Kompressoreinheit (10) nach Anspruch 2, ferner umfassend:
einen Vorwärmer (71), der einen Wärmeaustausch zwischen dem Wasserstoffgas vor dessen Ansaugung in die erste Kompressionsstufe (12) und dem durch den Zwischenkanal (22) strömenden Wasserstoffgas ermöglicht;
einen dritter Temperatursensor (48), der stromabwärts des Vorwärmers (71) in dem Zwischenkanal (22) angeordnet ist; und
eine Durchflussmengen-Einstelleinrichtung (FCV1), die eine Einstellung eines Einströmzustands des Wasserstoffgases in den Vorwärmer (71) ermöglicht,
wobei die Steuereinheit (50) eingerichtet ist, um:
wenn sich die Bedarfsziel-Umschalteinrichtung (CV1) in dem zweiten Schaltzustand befindet,
die Durchflussmengen-Einstelleinrichtung (FCV1) zu steuern, so dass eine Einströmmenge des Wasserstoffgases in den Vorwärmer (71) erhöht wird, um die Erwärmung des Wasserstoffgases in dem Ansaugkanal (21) durch den Vorwärmer (71) gegenüber der Erwärmung durch das Rücklaufteil (SB1) zu priorisieren, so dass eine durch den dritten Temperatursensor (48) erfasste Temperatur TS3 stromabwärts des Vorwärmers (71) nicht gleich oder niedriger als ein Schwellenwert wird; und
die Durchflussmengen-Einstelleinrichtung (FCV1) und das Rücklaufventil (18b) zu steuern, so dass die Ansaugtemperatur TS2 in den vorab festgelegten Temperaturbereich fällt, wenn die Ansaugtemperatur TS2 unterhalb des vorab festgelegten Temperaturbereichs liegt.

5. Kompressoreinheit (10) nach Anspruch 1, wobei
das Rückschlagventil (54) in dem Auslasskanal (24) vorgesehen ist, und
der Verzweigungspunkt (P_{B}) stromaufwärts des Rückschlagventils (54) in dem Auslasskanal (24) vorgesehen ist,
die Kompressoreinheit (10) ferner umfasst:
einen anderen Niederdruck-Gasaustrittspfad (83), der von einem anderen Verzweigungspunkt (P_{B}2) abzweigt, der in dem Zwischenkanal (22) vorgesehen ist, und es ermöglicht, das Wasserstoffgas zu einem anderen Niederdruck-Bedarfsziel (D3) abzuleiten, der dazu eingerichtet ist, das Wasserstoffgas bei einem Druck zu verarbeiten, der niedriger ist als ein von dem Hochdruck-Bedarfsziel (D1) benötigter Druck des Wasserstoffgases; und
eine zweite Bedarfsziel-Umschalteinrichtung (CV2), die in dem anderen Niederdruck-Gasaustrittspfad (83) oder an dem anderen Verzweigungspunkt (P_{B}2) vorgesehen ist,
die Steuereinheit (50) eingerichtet ist, um:
die zweite Bedarfsziel-Umschalteinrichtung (CV2) zu steuern, so dass das Wasserstoffgas in dem Zwischenkanal (22) in den anderen Niederdruck-Gasaustrittspfad (83) strömt, wenn sich die Bedarfsziel-Umschalteinrichtung (CV1) in dem ersten Schaltzustand befindet; und
die zweite Bedarfsziel-Umschalteinrichtung (CV2) zu steuern, so dass sie das Wasserstoffgas zu dem Auslasskanal in Richtung des Hochdruck-Bedarfsziels (D1) leitet, wenn sich die Bedarfsziel-Umschalteinrichtung (CV1) in dem zweiten Schaltzustand befindet.

6. Kompressoreinheit (10) nach Anspruch 1, wobei
das Rückschlagventil (54) in dem Auslasskanal (24) vorgesehen ist, und
der Verzweigungspunkt (P_{B}) an einer Stelle stromaufwärts des Rückschlagventils (54) in dem Auslasskanal (24) vorgesehen ist,
die Kompressoreinheit (10) ferner umfasst:
einen anderen Niederdruck-Gasaustrittspfad (83), der von einem anderen Verzweigungspunkt (P_{B}2) abzweigt, der in dem Zwischenkanal (22) vorgesehen ist, und es ermöglicht, das Wasserstoffgas zu einem anderen Niederdruck-Bedarfsziel (D3) abzuleiten, das dazu eingerichtet ist, das Wasserstoffgas bei einem Druck zu verarbeiten, der niedriger ist als der von dem Hochdruck-Bedarfsziel (D1) benötigte Druck des Wasserstoffgases;
eine zweite Bedarfsziel-Umschalteinrichtung (CV2), die in dem anderen Niederdruck-Gasaustrittspfad (83) oder an dem anderen Verzweigungspunkt (P_{B}2) vorgesehen ist; und
eine Einstelleinrichtung (41), die dazu eingerichtet ist, um eine Verarbeitungsmenge des Wasserstoffgases durch eine nachfolgende Kompressionsstufe (14) unter Ausschluss der ersten Kompressionsstufe unter der Vielzahl von Kompressionsstufen (12, 14) einzustellen,
die Steuereinheit (50) eingerichtet ist, um:
wenn sich die Bedarfsziel-Umschalteinrichtung (CV1) in dem zweiten Schaltzustand befindet,
die Einstelleinrichtung (41) zu steuern, so dass die Verarbeitungsmenge der nachfolgenden Kompressionsstufe (14) eingestellt wird, während die zweite Bedarfsziel-Umschalteinrichtung (CV2) gesteuert wird, so dass das Wasserstoffgas entsprechend einer Schwankung einer Bedarfsmenge des anderen Niederdruck-Bedarfsziels (D3) oder einer Bedarfsmenge des Hochdruck-Bedarfsziels (D1) in den anderen Niederdruck-Gasaustrittspfad (83) abgeleitet wird.

7. Kompressoreinheit (10) nach Anspruch 6, wobei
in einem Fall, in dem das Rücklaufteil (SB1) das in den Auslasskanal (24) abgegebene Wasserstoffgas in den Ansaugkanal (21) zurückführt,
die Einstelleinrichtung (41) ein zweites Rücklaufteil (SB2) mit einem zweiten Rücklaufkanal (43a) aufweist, der das Wasserstoffgas von stromaufwärts des Abzweigteils an dem Auslasskanal (24), an dem der Rücklaufkanal (18a) abzweigt, zu einer Ansaugseite der nachfolgenden Kompressionsstufe (14) zurückführt, und ein zweites Rücklaufventil (43b) aufweist, das die Rücklaufmenge in dem zweiten Rücklaufkanal (43a) einstellt, und
die Steuereinheit (10) eingerichtet ist, um:
das zweite Rücklaufventil (43b) zu steuern, so dass, wenn sich die Bedarfsziel-Umschalteinrichtung (CV1) in dem zweiten Schaltzustand befindet, eine Durchflussrate, die der Schwankung der Bedarfsmenge des anderen Niederdruck-Bedarfsziels (D3) oder der Bedarfsmenge des Hochdruck-Bedarfsziels (D1) entspricht, zur Ansaugseite der nachfolgenden Kompressionsstufe (14) zurückgeführt wird.

8. Kompressoreinheit (10) nach Anspruch 6, wobei
in einem Fall, in dem das Rücklaufteil (SB1) das durch den Zwischenkanal (22) strömende Wasserstoffgas zum Ansaugkanal (21) zurückführt,
die Einstelleinrichtung (41) ein zweites Rücklaufteil (SB2) mit einem zweiten Rücklaufkanal (43a) aufweist, der das aus jeder der Kompressionsstufen, die sich stromabwärts des Verzweigungsteils an dem Zwischenkanal (22) befinden, an dem der Rücklaufkanal (18a) abzweigt, abgegebene Wasserstoffgas zu einer stromaufwärtigen Seite der Kompressionsstufe (14b) zurückführt, und ein zweites Rücklaufventil (43b) aufweist, das die Rückführmenge in dem zweiten Rücklaufkanal (43a) einstellt, und
die Steuereinheit (50) dazu eingerichtet ist, das zweite Rücklaufventil (43b) zu steuern, so dass, wenn sich die Bedarfsziel-Umschalteinrichtung (CV1) in dem zweiten Schaltzustand befindet, eine Durchflussrate, die einer Rückführmenge des Rücklaufteils (SB1) entspricht, stromaufwärts der Kompressionsstufe (14b) zurückgeführt wird.

9. Kompressoreinheit (10) nach Anspruch 6, wobei
die Einstelleinrichtung (41) einen Saugventilentlaster (61) vom Ein-Aus-Typ aufweist, der an einem Zylinderteil der nachfolgenden Kompressionsstufe (14) angebracht ist, und
die Steuereinheit dazu eingerichtet ist, den Saugventilentlaster (61) zu steuern, so dass eine Durchflussrate, die der Schwankung der Bedarfsmenge des anderen Niederdruck-Bedarfsziels (D3) oder der Bedarfsmenge des Hochdruck-Bedarfsziels (D1) entspricht, zu einer Ansaugseite der nachfolgenden Kompressionsstufe (14) zurückgeführt wird, wenn sich die Bedarfsziel-Umschalteinrichtung (CV1) in dem zweiten Schaltzustand befindet.

10. Kompressoreinheit (10) nach Anspruch 6, wobei
die Einstelleinrichtung (41) eine stufenlose Leistungseinstellvorrichtung (64) aufweist, umfassend:
einen Saugventilentlaster (61b), der an einem Zylinderteil der nachfolgenden Kompressionsstufe (14) angebracht ist; und
eine hydraulische oder elektrische Antriebsvorrichtung (62b), die den Saugventilentlaster (61b) öffnet und schließt, und
die Steuereinheit (50) dazu eingerichtet ist, den Zeitpunkt zu steuern, zu dem der Saugventilentlaster (61b) in Verbindung mit einer Drehbewegung einer Kurbelwelle betätigt wird, derart, dass, wenn sich die Bedarfsziel-Umschalteinrichtung (CV1) in dem zweiten Schaltzustand befindet, das aus dem Inneren des Zylinderteils zu einer Ansaugseite angesaugte Wasserstoffgas entsprechend einer Durchflussrate zurückgeführt wird, die der Schwankung der Bedarfsmenge des anderen Niederdruck-Bedarfsziels (D3) oder der Bedarfsmenge des Hochdruck-Bedarfsziels (D1) entspricht, wodurch die Verarbeitungsmenge der nachfolgenden Kompressionsstufe (14) eingestellt wird.

11. Kolbenkompressoreinheit (10), die ein Wasserstoffgas, das ein Boiloff-Gas aus einem Flüssigwasserstoffspeichertank (23) ist, zurückgewinnt und zumindest einen Teil des Wasserstoffgases an ein Hochdruck-Bedarfsziel (D1) liefert, das mindestens eines von einem Motor, einer Energieerzeugungsanlage oder einem Kessel aufweist, wobei die Kompressoreinheit (10) umfasst:
eine Vielzahl von Kompressionsstufen (12, 14), die dazu eingerichtet sind, das aus einem Ansaugkanal (24) angesaugte Wasserstoffgas zu verdichten;
einen Kurbelmechanismus (16), der dazu eingerichtet ist, die Vielzahl von Kompressionsstufen (12, 14) anzutreiben;
ein Rücklaufteil (SB1) mit einem Rücklaufkanal (18a), der das in einen Auslasskanal (24) auf einer Auslassseite der Vielzahl von Kompressionsstufen (12, 14) abgegebene Wasserstoffgas oder das durch einen Zwischenkanal (22) zwischen der Vielzahl von Kompressionsstufen (12, 14) fließende Wasserstoffgas zum Ansaugkanal (21) zurückführt, und ein Rücklaufventil, das eine Rücklaufmenge in dem Rücklaufkanal (18a) einstellt;
einen Niederdruck-Gasaustrittspfad (53), der von einem Verzweigungspunkt (P_{B}) abzweigt, der in dem Zwischenkanal (22) vorgesehen ist, und es ermöglicht, das Wasserstoffgas zu einem Niederdruck-Bedarfsziel (D2) abzuleiten, das dazu eingerichtet ist, das Wasserstoffgas bei einem Druck zu verarbeiten, der niedriger ist als der von dem Hochdruck-Bedarfsziel (D1) benötigte Druck des Wasserstoffgases;
eine Bedarfsziel-Umschalteinrichtung (CV1), die in dem Niederdruck-Gasaustrittspfad (53) oder an dem Verzweigungspunkt (P_{B}) vorgesehen ist;
ein Rückschlagventil (54), das stromabwärts des Verzweigungspunkts (P_{B}) in dem Zwischenkanal (22) vorgesehen ist;
einen ersten Temperatursensor (46), der stromaufwärts des Verzweigungspunkts (P_{B}) in dem Zwischenkanal (22) angeordnet ist;
einen zweiten Temperatursensor (45), der zwischen einem Anschlussteil des Rücklaufkanals (18a) und einer ersten Kompressionsstufe (12) als eine vorderste Stufe unter der Vielzahl von Kompressionsstufen (12, 14) in dem Ansaugkanal (21) angeordnet ist;
einen Drucksensor (49), der in dem Niederdruck-Gasaustrittspfad (53) vorgesehen ist; und
eine Steuereinheit (50), die die Bedarfsziel-Umschalteinrichtung (CV1) und das Rücklaufventil (18b) steuert,
wobei die Steuereinheit (50) eingerichtet ist, um:
die Bedarfsziel-Umschalteinrichtung (CV1) zu steuern, so dass sie einen ersten Schaltzustand einnimmt, in dem das aus der ersten Kompressionsstufe (12) abgegebene Wasserstoffgas veranlasst wird, durch den Niederdruck-Gasaustrittspfad (53) zu strömen, wenn die Kompressoreinheit anläuft und eine von dem ersten Temperatursensor (46) erfasste Temperatur TS1 gleich oder höher als ein vorbestimmter erster Temperaturschwellenwert T1 ist, der höher als 0 °C ist;
die Bedarfsziel-Umschalteinrichtung (CV1) zu steuern, so dass sie einen dritten Schaltzustand einnimmt, in dem das Wasserstoffgas veranlasst wird, sowohl durch den Niederdruck-Gasaustrittspfad als auch stromabwärts des Verzweigungspunkts (P_{B}) in dem Zwischenkanal (22) zu strömen, wenn die von dem ersten Temperatursensor (46) erfasste Temperatur TS1 unter den ersten Temperaturschwellenwert T1 fällt; und
die Bedarfsziel-Umschalteinrichtung (CV1) zu steuern, so dass der von dem Drucksensor (49) erfasste Druck PS2 in einen voreingestellten Bereich fällt, die von dem zweiten Temperatursensor (45) erfasste Ansaugtemperatur TS2 zu berücksichtigen, und das Rücklaufventil (18b) zu steuern, so dass die Ansaugtemperatur TS2 in einen vorab festgelegten Temperaturbereich fällt, wenn sich die Bedarfsziel-Umschalteinrichtung (CV1) in dem dritten Schaltzustand befindet, und
der vorab festgelegte Temperaturbereich auf einen Bereich eingestellt ist, der höher als eine auf der Verflüssigungstemperatur von Luft basierende Referenztemperatur und niedriger als 0 °C ist.

12. Kompressoreinheit (10) nach Anspruch 11, ferner umfassend:
eine Einstelleinrichtung (41), die dazu eingerichtet ist, um eine Verarbeitungsmenge des Wasserstoffgases durch eine nachfolgende Kompressionsstufe (14) unter Ausschluss der ersten Kompressionsstufe (12) unter der Vielzahl von Kompressionsstufen (12, 14) einzustellen; und
einen zweiter Drucksensor (47), der in dem Zwischenkanal (22) zwischen der ersten Kompressionsstufe (12) und der nachfolgenden Kompressionsstufe (14) vorgesehen ist,
wobei die Steuereinheit (50) dazu eingerichtet ist, die Einstelleinrichtung (41) zu steuern, so dass die Verarbeitungsmenge der nachfolgenden Kompressionsstufe (14) entsprechend einer Änderung des Drucks PS1 in dem Zwischenkanal (22) eingestellt, die von dem zweiten Drucksensor (47) erfasst wird, wenn sich die Bedarfsziel-Umschalteinrichtung (CV1) in dem dritten Schaltzustand befindet.

## Revendications

1. Unité de compression à mouvement alternatif (10) qui récupère de l'hydrogène gazeux qui est un gaz d'évaporation provenant d'un réservoir de stockage d'hydrogène liquide (23) et qui fournit au moins une partie de l'hydrogène gazeux à une destination de demande à haute pression (D1) comprenant au moins un parmi un moteur, une installation de production d'énergie ou une chaudière, l'unité de compression (10) comprenant :
une pluralité d'étages de compression (12, 14) configurés pour comprimer l'hydrogène gazeux aspiré depuis un canal d'aspiration (21) ;
un mécanisme à manivelle (16) configuré pour entraîner la pluralité d'étages de compression (12, 14) ;
une partie de retour (SB1) comprenant un canal de retour (18a) qui renvoie l'hydrogène gazeux déchargé vers un canal de décharge (24) situé du côté de décharge de la pluralité d'étages de compression (12, 14) ou l'hydrogène gazeux s'écoulant à travers un canal intermédiaire (22) entre la pluralité d'étages de compression (12, 14) vers le canal d'aspiration (21), et un clapet de retour (18b) qui règle une quantité de retour dans le canal de retour (18a) ;
un trajet d'évacuation de gaz à basse pression (53) qui se ramifie à partir d'un point de dérivation (P_{B}) prévu dans le canal intermédiaire (22) ou le canal de décharge (24) et permet à l'hydrogène gazeux d'être évacué vers une destination de demande à basse pression (D2) configurée pour traiter l'hydrogène gazeux à une pression inférieure à la pression de l'hydrogène gazeux requise par la destination de demande à haute pression (D1) ;
un dispositif de commutation de la destination de demande (CV1) prévu dans le trajet d'évacuation de gaz à basse pression (53) ou au point de dérivation (P_{B}) ;
un clapet anti-retour (54) disposé en aval du point de dérivation (P_{B}) ;
un premier capteur de température (46) disposé en amont du point de dérivation (P_{B}) dans le canal intermédiaire (22) ou le canal de décharge (24) ;
un deuxième capteur de température (45) disposé entre une partie de raccordement du canal de retour (18a) et un premier étage de compression (12) en tant qu'étage principal parmi la pluralité d'étages de compression (12, 14) dans le canal d'aspiration (21) ; et
un dispositif de commande (50) qui commande le dispositif de commutation de la destination de demande (CV1) et le clapet de retour (18b),
dans laquelle le dispositif de commande (50) est configuré pour :
commander le dispositif de commutation de la destination de demande (CV1) pour qu'il adopte un premier état de commutation dans lequel l'hydrogène gazeux est amené à s'écouler par le trajet d'évacuation de gaz à basse pression (53), lorsque l'unité de compression démarre et qu'une température TS1 acquise par le premier capteur de température (46) est égale ou supérieure à un premier seuil de température prédéterminé T1 supérieur à 0 °C ;
commander le dispositif de commutation de la destination de demande (CV1) pour qu'il adopte un deuxième état de commutation dans lequel l'hydrogène gazeux est acheminé vers le canal de décharge (24) en direction de la destination de demande à haute pression (D1) lorsque la température TS1 acquise par le premier capteur de température (46) devient inférieure au premier seuil de température T1 ; et
se référer à une température d'aspiration TS2 acquise par le deuxième capteur de température (45) et commander le clapet de retour (18b) de telle sorte que la température d'aspiration TS2 se situe dans une plage de température déterminée à l'avance lorsque le dispositif de commutation de la destination de demande (CV1) est dans le deuxième état de commutation, et
la plage de température déterminée à l'avance est réglée à une plage supérieure à une température de référence basée sur la température de liquéfaction de l'air et inférieure à 0 °C.

2. Unité de compression (10) selon la revendication 1, dans laquelle
le clapet anti-retour (54) est prévu dans le canal de décharge (24), et
le point de dérivation (P_{B}) est prévu à une position en amont du clapet anti-retour (54) dans le canal de décharge (24).

3. Unité de compression (10) selon la revendication 2, comprenant en outre :
un préchauffeur (71) permettant un échange thermique entre l'hydrogène gazeux avant d'être aspiré dans le premier étage de compression (12) et l'hydrogène gazeux après avoir été déchargé dans le canal de décharge (24) ;
un troisième capteur de température (48) disposé en aval du préchauffeur (71) dans le canal de décharge (24) ; et
un moyen de réglage du débit (FCV1) permettant de régler un état de débit d'entrée de l'hydrogène gazeux dans le préchauffeur (71),
dans laquelle le dispositif de commande (50) est configuré pour :
lorsque le dispositif de commutation de la destination de demande (CV1) est dans le deuxième état de commutation,
commander le moyen de réglage du débit (FCV1) de telle sorte qu'une température TS3 en aval du préchauffeur (71), acquise par le troisième capteur de température (48), ne devienne pas égale ou inférieure à un seuil, tout en augmentant un montant de débit d'entrée d'hydrogène gazeux dans le préchauffeur (71) afin de prioriser le chauffage de l'hydrogène gazeux dans le canal d'aspiration (21) par le préchauffeur (71) par rapport au chauffage par la partie de retour (SB1) ; et
commander le moyen de réglage du débit (FCV1) et le clapet de retour (18b) de manière à ce que la température d'aspiration TS2 se situe dans la plage de température déterminée à l'avance lorsque la température d'aspiration TS2 est inférieure à la plage de température déterminée à l'avance

4. Unité de compression (10) selon la revendication 2, comprenant en outre :
un préchauffeur (71) permettant l'échange thermique entre l'hydrogène gazeux avent d'être aspiré dans le premier étage de compression (12) et l'hydrogène gazeux circulant dans le canal intermédiaire (22) ;
un troisième capteur de température (48) disposé en aval du préchauffeur (71) dans le canal intermédiaire (22) ; et
un moyen de réglage du débit (FCV1) permettant de régler un état de débit d'entrée de l'hydrogène gazeux dans le préchauffeur (71),
dans laquelle le dispositif de commande (50) est configuré pour :
lorsque le dispositif de commutation de la destination de demande (CV1) est dans le deuxième état de commutation,
commander le moyen de réglage du débit (FCV1) afin d'augmenter un montant de débit d'entrée de l'hydrogène gazeux dans le préchauffeur (71), pour prioriser le chauffage de l'hydrogène gazeux dans le canal d'aspiration (21) par le préchauffeur (71) par rapport au chauffage par la partie de retour (SB1), de sorte qu'une température TS3 en aval du préchauffeur (71) acquise par le troisième capteur de température (48) ne devienne pas égale ou inférieure à un seuil ; et
commander le moyen de réglage du débit (FCV1) et le clapet de retour (18b) de manière à ce que la température d'aspiration TS2 se situe dans la plage de température déterminée à l'avance lorsque la température d'aspiration TS2 est inférieure à la plage de température déterminée à l'avance

5. Unité de compression (10) selon la revendication 1, dans laquelle
le clapet anti-retour (54) est prévu dans le canal de décharge (24), et
le point de dérivation (P_{B}) est prévu en amont du clapet anti-retour (54) dans le canal de décharge (24),
l'unité de compression (10) comprend en outre :
un autre trajet d'évacuation de gaz à basse pression (83) qui se ramifie à partir d'un autre point de dérivation (P_{B}2) prévu dans le canal intermédiaire (22) et permet à l'hydrogène gazeux d'être évacué vers une autre destination de demande à basse pression (D3) configurée pour traiter l'hydrogène gazeux à une pression inférieure à une pression de l'hydrogène gazeux requise par la destination de demande à haute pression (D1) ; et
un deuxième dispositif de commutation de la destination de demande (CV2) prévu dans l'autre trajet d'évacuation de gaz à basse pression (83) ou à l'autre point de dérivation (P_{B}2),
le dispositif de commande (50) est configuré pour :
commander le deuxième dispositif de commutation de la destination de demande (CV2) afin de faire s'écouler l'hydrogène gazeux dans le canal intermédiaire (22) dans l'autre trajet d'évacuation de gaz à basse pression (83) lorsque le dispositif de commutation de la destination de demande (CV1) se trouve dans le premier état de commutation ; et
commander le deuxième dispositif de commutation de la destination de demande (CV2) pour envoyer l'hydrogène gazeux vers le canal de décharge en direction de la destination de demande à haute pression (D1) lorsque le dispositif de commutation de la destination de demande (CV1) se trouve dans le deuxième état de commutation.

6. Unité de compression (10) selon la revendication 1, dans laquelle
le clapet anti-retour (54) est prévu dans le canal de décharge (24), et
le point de dérivation (P_{B}) est prévu à une position en amont du clapet anti-retour (54) dans le canal de décharge (24),
l'unité de compression (10) comprend en outre :
un autre trajet d'évacuation de gaz à basse pression (83) qui se ramifie à partir d'un autre point de dérivation (P_{B}2) prévu dans le canal intermédiaire (22) et permet à l'hydrogène gazeux d'être évacué vers une autre destination de demande à basse pression (D3) configurée pour traiter l'hydrogène gazeux à une pression inférieure à une pression de l'hydrogène gazeux requise par la destination de demande à haute pression (D1) ;
un deuxième dispositif de commutation de la destination de demande (CV2) prévu dans l'autre trajet d'évacuation de gaz à basse pression (83) ou à l'autre point de dérivation (P_{B}2) ; et
un moyen de réglage (41) configuré pour régler une quantité de traitement de l'hydrogène gazeux par un étage de compression suivant (14), à l'exclusion du premier étage de compression parmi la pluralité d'étages de compression (12, 14),
le dispositif de commande (50) est configuré pour :
lorsque le dispositif de commutation de la destination de demande (CV1) est dans le deuxième état de commutation,
commander le moyen de réglage (41) de manière à régler la quantité de traitement de l'étage de compression suivant (14), tout en commandant le deuxième dispositif de commutation de la destination de demande (CV2) de manière à ce que l'hydrogène gazeux soit évacué vers l'autre trajet d'évacuation de gaz à basse pression (83) en fonction d'une fluctuation de la quantité de demandé de l'autre destination de demande à basse pression (D3) ou de la quantité de demandé de la destination de demande à haute pression (D1).

7. Unité de compression (10) selon la revendication 6, dans laquelle
dans le cas où la partie de retour (SB1) renvoie l'hydrogène gazeux déchargé dans le canal de décharge (24) vers le canal d'aspiration (21),
le moyen de réglage (41) comprend une deuxième partie de retour (SB2) qui comprend un deuxième canal de retour (43a) renvoyant l'hydrogène gazeux vers un côté d'aspiration de l'étage de compression suivant (14) depuis l'amont de la partie de dérivation sur le canal de décharge (24) où le canal de retour (18a) se ramifie, et un deuxième clapet de retour (43b) qui règle la quantité de retour dans le deuxième canal de retour (43a), et
le dispositif de commande (10) est configuré pour :
commander le deuxième clapet de retour (43b) de telle sorte que, lorsque le dispositif de commutation de la destination de demande (CV1) se trouve dans le deuxième état de commutation, un débit correspondant à la fluctuation de la quantité de demande de l'autre destination de demande à basse pression (D3) ou à la quantité de demande de la destination de demande à haute pression (D1) soit renvoyé vers le côté d'aspiration de l'étage de compression suivant (14).

8. Unité de compression (10) selon la revendication 6, dans laquelle
dans le cas où la partie de retour (SB1) renvoie l'hydrogène gazeux s'écoulant à travers le canal intermédiaire (22) vers le canal d'aspiration (21),
le moyen de réglage (41) comprend une deuxième partie de retour (SB2) qui comporte un deuxième canal de retour (43a) renvoyant l'hydrogène gazeux déchargé de chacun des étages de compression situés en aval de la partie de dérivation sur le canal intermédiaire (22) où le canal de retour (18a) se ramifie vers un côté amont de l'étage de compression (14b), et un deuxième clapet de retour (43b) qui règle la quantité de retour dans le deuxième canal de retour (43a), et
le dispositif de commande (50) est configuré pour commander le deuxième clapet de retour (43b) de telle sorte que, lorsque le dispositif de commutation de la destination de demande (CV1) se trouve dans le deuxième état de commutation, un débit correspondant à une quantité de retour de la partie de retour (SB1) soit renvoyé en amont de l'étage de compression (14b).

9. Unité de compression (10) selon la revendication 6, dans laquelle
le moyen de réglage (41) comprend un déchargeur de clapet d'aspiration de type tout ou rien (61) monté sur une partie de cylindre de l'étage de compression suivant (14), et
le dispositif de commande est configuré pour commander le déchargeur de clapet d'aspiration (61) de telle sorte qu'un débit correspondant à la fluctuation de la quantité de demande de l'autre destination de demande à basse pression (D3) ou à la quantité de demande de la destination de demande à haute pression (D1) soit renvoyé vers un côté d'aspiration de l'étage de compression suivant (14) lorsque le dispositif de commutation de la destination de demande (CV1) se trouve dans le deuxième état de commutation.

10. Unité de compression (10) selon la revendication 6, dans laquelle
le moyen de réglage (41) comprend un dispositif de réglage de la capacité en continu (64) comprenant :
un déchargeur de clapet d'aspiration (61b) montée sur une partie de cylindre de l'étage de compression suivant (14) ; et
un dispositif d'entraînement hydraulique ou électrique (62b) qui ouvre et ferme le déchargeur de clapet d'aspiration (61b), et
le dispositif de commande (50) est configuré pour commander le moment où le déchargeur de clapet d'aspiration (61b) fonctionne en conjonction avec un mouvement de rotation d'un vilebrequin, de telle sorte que, lorsque le dispositif de commutation de la destination de demande (CV1) se trouve dans le deuxième état de commutation, l'hydrogène gazeux aspiré de l'intérieur de la partie de cylindre vers un côté d'aspiration est renvoyé selon un débit correspondant à la fluctuation de la quantité de demande de l'autre destination de demande à basse pression (D3) ou à la quantité de demande de la destination de demande à haute pression (D1), ce qui permet d'ajuster la quantité de traitement de l'étage de compression suivant (14).

11. Unité de compression à mouvement alternatif (10) qui récupère de l'hydrogène gazeux qui est un gaz d'évaporation provenant d'un réservoir de stockage d'hydrogène liquide (23) et qui fournit au moins une partie de l'hydrogène gazeux à une destination de demande à haute pression (D1) comprenant au moins un parmi un moteur, une installation de production d'énergie ou une chaudière, l'unité de compression (10) comprenant :
une pluralité d'étages de compression (12, 14) configurés pour comprimer l'hydrogène gazeux aspiré depuis un canal d'aspiration (24) ;
un mécanisme à manivelle (16) configuré pour entraîner la pluralité d'étages de compression (12, 14) ;
une partie de retour (SB1) comprenant un canal de retour (18a) qui renvoie l'hydrogène gazeux déchargé vers un canal de décharge (24) situé du côté de décharge de la pluralité d'étages de compression (12, 14) ou l'hydrogène gazeux s'écoulant à travers un canal intermédiaire (22) entre la pluralité d'étages de compression (12, 14) vers le canal d'aspiration (21), et un clapet de retour qui règle une quantité de retour dans le canal de retour (18a) ;
un trajet d'évacuation de gaz à basse pression (53) qui se ramifie à partir d'un point de dérivation (P_{B}) prévu dans le canal intermédiaire (22) et permet à l'hydrogène gazeux d'être évacué vers une destination de demande à basse pression (D2) configurée pour traiter l'hydrogène gazeux à une pression inférieure à la pression de l'hydrogène gazeux requise par la destination de demande à haute pression (D1) ;
un dispositif de commutation de la destination de demande (CV1) prévu dans le trajet d'évacuation de gaz à basse pression (53) ou au point de dérivation (P_{B}) ;
un clapet anti-retour (54) prévu en aval du point de dérivation (P_{B}) dans le canal intermédiaire (22) ;
un premier capteur de température (46) disposé en amont du point de dérivation (P_{B}) dans le canal intermédiaire (22) ;
un deuxième capteur de température (45) disposé entre une partie de raccordement du canal de retour (18a) et un premier étage de compression (12) en tant qu'étage principal parmi la pluralité d'étages de compression (12, 14) dans le canal d'aspiration (21) ;
un capteur de pression (49) prévu dans le trajet d'évacuation de gaz à basse pression (53) ; et
un dispositif de commande (50) qui commande le dispositif de commutation de la destination de demande (CV1) et le clapet de retour (18b),
dans laquelle le dispositif de commande (50) est configuré pour :
commander le dispositif de commutation de la destination de demande (CV1) pour qu'il adopte un premier état de commutation dans lequel l'hydrogène gazeux déchargé du premier état de compression (12) est amené à s'écouler par le trajet d'évacuation de gaz à basse pression (53), lorsque l'unité de compression démarre et qu'une température TS1 acquise par le premier capteur de température (46) est égale ou supérieure à un premier seuil de température prédéterminé T1 supérieur à 0 °C ;
commander le dispositif de commutation de la destination de demande (CV1) pour qu'il adopte un troisième état de commutation dans lequel l'hydrogène gazeux est amené à s'écouler à la fois à travers le trajet d'évacuation de gaz à basse pression et en aval du point de dérivation (P_{B}) dans le canal intermédiaire (22) lorsque la température TS1 acquise par le premier capteur de température (46) devient inférieure au premier seuil de température T1 ; et
commander le dispositif de commutation de la destination de demande (CV1) de telle sorte que la pression PS2 acquise par le capteur de pression (49) se situe dans une plage prédéfinie, se référer à une température d'aspiration TS2 acquise par le deuxième capteur de température (45) et commander le clapet de retour (18b) de telle sorte que la température d'aspiration TS2 se situe dans une plage de température déterminée à l'avance lorsque le dispositif de commutation de la destination de demande (CV1) est dans le troisième état de commutation, et
la plage de température déterminée à l'avance est réglée à une plage supérieure à une température de référence basée sur la température de liquéfaction de l'air et inférieure à 0 °C.

12. Unité de compression (10) selon la revendication 11, comprenant en outre :
un moyen de réglage (41) configuré pour régler une quantité de traitement d'hydrogène gazeux par un étage de compression suivant (14), à l'exclusion du premier étage de compression (12) parmi la pluralité d'étages de compression (12, 14) ; et
un deuxième capteur de pression (47) prévu entre le premier étage de compression (12) et l'étage de compression suivant (14) dans le canal intermédiaire (22),
dans lequel le dispositif de commande (50) est configuré pour commander le moyen de réglage (41) de telle sorte que la quantité de traitement de l'étage de compression suivant (14) soit réglé en fonction d'une quantité de modification de la pression PS1 dans le canal intermédiaire (22) acquise par le deuxième capteur de pression (47) lorsque le dispositif de commutation de la destination de demande (CV1) se trouve dans le troisième état de commutation.
